# EUROPÄISCHE PATENTSCHRIFT

(11) **EP 4 295 064 B1**
(45) Veröffentlichungstag und Bekanntmachung des Hinweises auf die Patenterteilung: **25.12.2024**
(21) Anmeldenummer: 22708507.3
(22) Anmeldetag: 14.02.2022
(51) Int. Cl.: F16K 11/074, F16K 21/06, F16K 31/385, F16K 31/524, F16K 27/02, F16K 11/00

(54) **SANITÄRVENTIL**
SANITARY VALVE
SOUPAPE SANITAIRE

(30) Priorität: 19.02.2021 DE 202021100840 U
(43) Veröffentlichungstag der Anmeldung: 27.12.2023
(73) Patentinhaber: Neoperl GmbH, 79379 Müllheim (DE)
(72) Erfinder: KOWOL, Jacek, 79194 Gundelfingen (DE)
(74) Vertreter: Mertzlufft-Paufler, Cornelius
(86) Internationale Anmeldenummer: PCT/EP2022/053483
(87) Internationale Veröffentlichungsnummer: WO 2022/175196

(56) Entgegenhaltungen:
- EP-A1- 2 865 929
- EP-A1- 3 147 546
- EP-A1- 3 537 015
- CN-A- 104 948 777
- DE-A1- 102019 103 609
- DE-U1- 202017 104 187

## Beschreibung

Die Erfindung betrifft ein Sanitärventil mit einem Hauptventil, das eine bewegliche Membran aufweist, die zwischen einer Schließstellung, in welcher Schließstellung die Membran auf einem Ventilsitz des Hauptventils dicht aufliegt, und mindestens einer Offenstellung bewegbar ist, in welcher Offenstellung die Membran vom Ventilsitz beanstandet ist.

Aus der DE 10 2017 105 200 A1 ist bereits ein Sanitärventil der eingangs erwähnten Art vorbekannt, das zum Zu- oder Umschalten im Wasserweg einer Wasserversorgungsleitung zwischengeschaltet sein kann. Das vorbekannte Sanitärventil weist dazu ein Hauptventil auf, dessen Ventileinlass mit einem zuströmseitigen Leitungsabschnitt und dessen Ventilauslass mit einem abströmseitigen Abschnitt des Wasserweges verbunden ist. Das Hauptventil weist eine bewegliche Membran auf, die in der Schließstellung des Hauptventils auf einem Ventilsitz dicht aufliegt, und die in einer Offenstellung den Ventilsitz freigibt. Das vorbekannte Sanitärventil hat auch ein Pilotventil, mit welchem das Hauptventil zwischen einer Offenstellung und einer Schließstellung ansteuerbar ist. Dabei ist die Position der Membran durch die Position eines Ventilstößels vorgebbar, der mit einer Push-Push-Mechanik in Steuerverbindung steht, mit welcher der Ventilstößel zwischen einer der Offenstellung entsprechenden Schaltposition und einer der Schließstellung entsprechenden Schaltposition umschaltbar ist. Zwischen der Offenstellung und der Schließstellung kann die Push-Push-Mechanik stufenweise auch Zwischenstellungen vorgeben, in welchen die Membran in unterschiedlichen Abständen zum Ventilsitz gehalten wird und somit einen gegenüber der Offenstellung reduzierten Durchflussquerschnitt freigibt. Eine stufenlose Mengenregulierung der durch das Hauptventil durchfließenden Wassermenge oder gar das Einregeln und Mischen der aus verschiedenen Flüssigkeitszuläufen zuströmenden Flüssigkeiten ist bei dem vorbekannten Sanitärventil jedoch nicht möglich.

Aus der DE 10 2016 115 793 A1 ist bereits eine sanitäre Ventileinheit vorbekannt, die beispielsweise in einem Wasserhahn für ein Badezimmer montiert sein kann. Diese vorbekannte Ventileinheit ist in einen Hahnhauptkörper des Wasserhahns eingebaut und weist ein Temperaturregelventil, ein Wassersparventil sowie ein Berührungselement auf. Dabei ist das Temperaturregelventil in eine Montagekammer im Hahnhauptkörper eingebaut. Das Temperaturregelventil weist ein Wasserzulaufteil, eine Mischkammer und ein Wasserauslaufteil auf, wobei Kaltwasser und Warmwasser in das Wasserzulaufteil fließen und in der Mischkammer in einem vorgegebenen Verhältnis zu Mischwasser gemischt werden, von wo das Mischwasser über das Wasserauslaufteil austritt. Das Temperaturregelventil der vorbekannten Ventileinheit umfasst einen inneren Wassereinlauf-Ventilsitz, einen Mischventileinsatz und einen Temperaturregelventil-Buchsenkörper. Der innere Wassereinlauf-Ventilsitz ist mit einem Kaltwasserzulauf-Durchflusskanal und einem Warmwasserzulauf-Durchflusskanal versehen, wobei das Kaltwasser in den Kaltwasserzulauf-Durchflusskanal und das Warmwasser in den Warmwasserzulauf-Durchflusskanal fließt. Der Kaltwasserzulauf-Durchflusskanal und der Warmwasserzulauf-Durchflusskanal bilden das Wasserzulaufteil der vorbekannten Ventileinheit. Dabei ist der Wassereinlauf-Ventilsitz mit dem unteren Ende eines Mischventileinsatzes fest verbunden, wobei im Inneren des Mischventileinsatzes eine Mischkammer und ein mit der Mischkammer kommunizierender Mischwasserauslauf-Durchflusskanal abgegrenzt sind, und wobei sich der Mischwasserauslauf-Durchflusskanal im Wasserauslaufteil befindet. Der Temperaturregelventil-Buchsenkörper kann innerhalb eines vorgegebenen Winkelbereiches beschränkt drehbar über den Mischventileinsatz gezogen werden und wird axial zwischen dem Mischventileinsatz und dem Wassereinlaufventilsitz begrenzt. Zwischen dem Temperaturregelventil-Buchsenkörper und dem Mischventileinsatz sind ein Kaltwasserdurchlasskanal und ein Warmwasserdurchlasskanal begrenzt. Wird der Temperaturregelventil-Buchsenkörper gedreht, können die Durchflussmenge des zwischen dem Kaltwasserdurchlasskanal und dem Kaltwasserzulauf-Durchflusskanal strömenden Wassers und die Durchflussmenge des zwischen dem Warmwasserdurchlasskanal und dem Wasserzulauf-Durchflusskanal strömenden Wassers unmittelbar reguliert werden, um das Mischverhältnis des zur Mischkammer fließenden Kalt- und Warmwassers sowie die Mischwassertemperatur zu steuern.

Da die aus DE 10 2016 115 793 A1 vorbekannte Ventileinheit ein Temperaturregelventil und ein Wassersparventil aufweist und da das Temperaturregelventil der vorbekannten Ventileinheit mit seinem Wasserzulaufteil, der Mischkammer sowie dem Wasserauslaufteil aus mehreren separaten Bestandteilen montiert ist, weist die vorbekannte sanitäre Ventil-Einheit eine vergleichsweise große Einbaulänge auf.

Aus der EP 2 865 929 A1 ist eine Vorrichtung zur Regulierung des Wassers in einer Dusche, einem Badezimmer oder einem Waschbecken bekannt, die Folgendes umfasst: einen Verschluss mit mindestens einem Metallteil, der in einer zylindrischen Kammer mit einem Durchmesser, der im Wesentlichen dem Durchmesser des Verschlusses entspricht, verschiebbar ist; einen Magneten, der mit dem Metallteil des Verschlusses verbunden ist; einen Druckknopf, der so konfiguriert ist, dass er den Magneten und den Verschluss entlang einer Achse der zylindrischen Kammer in zwei verschiedene Positionen verschiebt, die dem Öffnen des Durchflusses oder dem Schließen des Durchflusses von Wasser aus einem Diffusor entsprechen, wobei der Druckknopf auch um die Achse drehbar ist, um die offene Position des Verschlusses entlang der Achse und eine entsprechende Durchflussmenge zu verändern, wobei die Vorrichtung ferner einen Knopf umfasst, der um die Achse drehbar ist, um die Temperatur des Wassers einzustellen.

Es besteht daher die Aufgabe, ein Sanitärventil der eingangs erwähnten Art zu schaffen, das über eine Schließfunktion zum Öffnen und verschließen des Wasserauslaufs auch eine Mischfunktion zum Mischen des aus unterschiedlichen Zuflussleitungen zuströmende Wassers, beispielsweise von Heiß- und Kaltwasser, oder aber ein Einregeln des aus dem erfindungsgemäßen Sanitärventil pro Zeiteinheit ausströmenden Flüssigkeitsvolumens erlaubt und das sich dennoch durch eine kompakte Bauweise und eine vergleichsweise kurze Einbaulänge auszeichnet.

Die erfindungsgemäße Lösung dieser Aufgabe besteht bei dem Sanitärventil der eingangs erwähnten Art insbesondere darin, dass das Hauptventil im Gehäuseinneren eines Innengehäuses vorgesehen ist, welches Innengehäuse in einem Außengehäuse um eine Drehachse drehbar gelagert ist, dass im Innengehäuse eine erste Ventilöffnung vorgesehen ist, die mit einer ersten Ventilöffnung im Außengehäuse flüssigkeitsführend zu einem Ventilauslass verbunden ist, welches Paar erster Ventilöffnungen in der Drehachse von Außengehäuse und Innengehäuse angeordnet ist, dass das Innengehäuse wenigstens eine zweite Ventilöffnung hat, die gegenüber dem Ventilauslass außenliegend angeordnet und mit mindestens einer zweiten Ventilöffnung im Außengehäuse zu wenigstens einem Ventileinlass einander zugeordnet ist, dass die jeweils einander zugeordneten zweiten Ventilöffnungen durch Relativverdrehen von Innen- und Außengehäuse derart in Deckung bringbar sind, dass der durch Überdeckung der jeweils einander zugeordneten zweiten Ventilöffnungen freibleibende lichte Öffnungsquerschnitt des wenigstens einen Ventileinlasses veränderbar ist, dass das Innengehäuse ein topfförmiges Gehäuse-Unterteil aufweist, an dessen Topfboden-Innenseite ein Ventilstutzen vorsteht, der die den Ventilauslass bildende erste Ventilöffnung des Innenteils mit dem durch den freien Hülsen-Endbereich des Ventilstutzens gebildeten Ventilsitz verbindet, und dass das die Ventilöffnungen des Innengehäuses aufweisende Gehäuse-Unterteil zumindest in einer gegenüber den Ventilöffnungen außenliegenden Ringzone des Topfbodens und / oder dem Gehäuseaußenumfang des Innengehäuses flüssigkeitsdicht am Außengehäuse anliegt.

Das erfindungsgemäße Sanitärventil weist ein Innengehäuse auf, das in einem Außengehäuse drehbar gelagert ist. Im Gehäuseinneren des Innengehäuses ist ein Hauptventil vorgesehen, das eine bewegliche Membran aufweist, die zwischen einer Schließstellung, in welcher Schließstellung die Membran auf einem Ventilsitz des Hauptventils dicht aufliegt, und mindestens einer Offenstellung bewegbar ist, in welcher Offenstellung die Membran vom Ventilsitz beabstandet ist. Mithilfe dieses Hauptventils lässt sich also der Flüssigkeitsauslauf aus dem erfindungsgemäßen Sanitärventil wahlweise bzw. wechselweise öffnen oder verschließen. Das im Außengehäuse um eine Drehachse verdrehbar gelagerte Innengehäuse hat eine erste Ventilöffnung, die mit einer ersten Ventilöffnung im Außengehäuse flüssigkeitsführend zu einem Ventilauslass des Hauptventils verbunden ist, wobei dieses Paar erster Ventilöffnungen in der Drehachse zwischen Außen- und Innengehäuse angeordnet ist. Das Ventilgehäuse weist auch wenigstens eine zweite Ventilöffnung auf, die gegenüber dem Ventilauslass des erfindungsgemäßen Sanitärventils außenliegend angeordnet ist und mit wenigstens einer zweiten Ventilöffnung im Außengehäuse zu wenigstens einem Ventileinlass einander zugeordnet ist. Um die über den wenigstens einen Ventileinlass zuströmende Flüssigkeit in ihrem durch das Sanitärventil durchfließenden Volumenstrom einregeln und/oder um Flüssigkeiten mit verschiedenen Eigenschaften, z.B. Heiß- oder Kaltwasser, vermischen zu können, sind die jeweils einander zugeordneten zweiten Ventilöffnungen durch Relativverdrehen von Innen- und Außengehäuse derart in Deckung bringbar, dass der durch Überdeckung der jeweils einander zugeordneten zweiten Ventilöffnungen freibleibende lichte Öffnungsquerschnitt des wenigstens einen Ventileinlasses veränderbar ist. Dabei weist das Innengehäuse ein topfförmiges Gehäuse-Unterteil auf, an dessen Topfboden-Innenseite ein Ventilstutzen vorsteht, der die den Ventilauslass bildende erste Ventilöffnung des Innenteils mit dem durch den freien Hülsen-Endbereich des Ventilstutzens gebildeten Ventilsitz verbindet. Auf diese Weise bildet sich zwischen dem Ventilstutzen und dem Gehäuseinnenumfang des Gehäuse-Unterteils eine Flüssigkeitskammer aus, die bei einer Ausgestaltung des erfindungsgemäßen Sanitärventils als Mischventil auch als Mischkammer dienen kann. Dabei liegt das die Ventilöffnungen des Innengehäuses aufweisende Gehäuse-Unterteil zumindest in einer gegenüber den Ventilöffnungen außenliegenden Ringzone des Topfbodens und, vorzugsweise, mit dem Gehäuseaußenumfang des Gehäuse-Unterteils flüssigkeitsdicht am Außengehäuse an.

Um die kompakte Bauweise des erfindungsgemäßen Sanitärventils noch zusätzlich zu begünstigen, kann es vorteilhaft sein, wenn das Außengehäuse einen vorzugsweise scheiben- oder plattenförmigen Gehäuseboden hat, an dem das Gehäuse-Unterteil des Innengehäuses zumindest mit seiner außenliegenden Ring- und/oder Umfangszone flüssigkeitsdicht und verdrehbar anliegt. Bei dieser Ausführungsform gemäß der Erfindung kann der scheiben- oder plattenförmige Gehäuseboden mit Ausnahme der darin vorgesehenen Ventilöffnungen als konstruktiv einfaches, massives Bauteil ausgestaltet sein.

Damit das Gehäuse-Unterteil des Innengehäuses zumindest in einer außenliegenden Ringzone des Topfbodens und/oder mit seinem Gehäuseaußenumfang flüssigkeitsdicht am Außengehäuse anliegt, ist es vorteilhaft, wenn das Gehäuse-Unterteil des Innengehäuses und/oder der/ein Gehäuseboden des Außengehäuses aus Keramik hergestellt ist/sind. Dabei liegen diese Bestandteile von Außengehäuse und Innengehäuse verschleißfrei und flüssigkeitsdicht aneinander an, wenn das Gehäuse-Unterteil und vorzugsweise auch der Gehäuseboden aus Keramik hergestellt sind.

Damit das die Flüssigkeits- oder Mischkammer im Gehäuse-Unterteil durchströmende Wasser gut aus dieser Flüssigkeits- oder Mischkammer austreten kann, ist es vorteilhaft, wenn die ersten Ventilöffnungen von Außengehäuse und Innengehäuse zumindest in ihren zueinander benachbarten Bereichen einen kreisrunden und/oder kongruenten Öffnungsquerschnitt haben.

Um die das erfindungsgemäße Sanitärventil durchströmende Volumenleistung gut einregeln zu können, ist es vorteilhaft, wenn die mit zumindest einer zweiten Ventilöffnung im Außengehäuse flüssigkeitsführend verbundene zweite Ventilöffnung im Innengehäuse als sichel- oder kreisbogenförmiges Langloch ausgebildet ist.

Bevorzugte Ausführungsbeispiele des erfindungsgemäßen Sanitärventils sehen vor, dass das Sanitärventil als Schließ- und Mischventil oder als Schließ- und Regelventil ausgebildet ist.

Um das erfindungsgemäße Sanitärventil als Schließ- und Mischventil ausgestalten zu können, ist es vorteilhaft, wenn die erste Ventilöffnung im Innengehäuse zumindest zwei zweiten Ventilöffnungen im Außengehäuse derart zugeordnet ist, dass durch Relativverdrehen von Innen- und Außengehäuse der lichte Öffnungsquerschnitt zwischen der zweiten Ventilöffnung im Innengehäuse und zumindest einer der im Außengehäuse vorgesehenen zweiten Ventilöffnungen reduzierbar und gleichzeitig gegenüber der zweiten Ventilöffnung im Innengehäuse und wenigstens einer anderen Ventilöffnung der im Außengehäuse vorgesehenen zweiten Ventilöffnungen vergrößerbar ist und umgekehrt.

Ist das erfindungsgemäße Sanitärventil als Schließ- und Mischventil ausgebildet, ist es vorteilhaft, wenn die im Außengehäuse vorgesehenen zweiten Ventilöffnungen mit verschiedenen Flüssigkeitszuführungen beispielsweise für Warm- und Kaltwasser verbindbar sind.

Die konstruktiv einfache, wartungsarme und kompakte Bauweise des erfindungsgemäßen Sanitärventils wird noch begünstigt, wenn der zwischen dem Ventilstutzen und dem Gehäuseinnenumfang des Gehäuse-Unterteils vorgesehene Ringraum eine Mischkammer bildet.

Ein bevorzugtes Ausführungsbeispiel gemäß der Erfindung sieht vor, dass das Gehäuse-Unterteil mit einem ein-, zwei- oder mehrteiligen Gehäuse-Oberteil des Innengehäuses verbunden ist, dass die Membran zwischen dem Gehäuse-Unterteil und dem Gehäuse-Oberteil des Innengehäuses in einer Einspannzone eingespannt ist, und dass die Membran zumindest mit ihrer Einspannzone zwischen dem Gehäuse-Unterteil und dem Gehäuse-Oberteil des Innengehäuses abdichtet.

Bei dieser erfindungsgemäßen Lösung ist die Membran zwischen dem Gehäuse-Unterteil und einem Gehäuse-Oberteil des Innengehäuses in einer Einspannzone eingespannt. Die Membran dichtet dabei zwischen dem beispielsweise aus Keramik bestehenden Gehäuse-Unterteil einerseits und dem vorzugsweise aus Kunststoff hergestellten Gehäuse-Oberteil des Innengehäuses andererseits ab.

Ein bevorzugtes Ausführungsbeispiel gemäß der Erfindung sieht vor, dass das Gehäuse-Unterteil und das Gehäuse-Oberteil des Innengehäuses materialverschieden sind und/oder dass das Gehäuse-Oberteil des Innengehäuses aus Kunststoff hergestellt ist.

Um das erfindungsgemäße Sanitärventil funktionssicher bedienen zu können, ist jede Mechanik geeignet, die ein Anlegen der Membran an den Ventilsitz des Hauptventils oder aber ein Abheben der Membran vom Ventilsitz erlaubt. Eine weiterbildende Ausführungsform gemäß der Erfindung sieht jedoch vor, dass das Sanitärventil in seinem Innengehäuse ein Pilotventil hat, mit welchem das Hauptventil zwischen der Offenstellung und der Schließstellung ansteuerbar ist, und dass die Position der Membran durch die Position eines Ventilstößels vorgebbar ist, der mit einer Push-Push-Mechanik verbunden ist, mit welcher der Ventilstößel zwischen einer der Offenstellung entsprechenden Schaltposition und einer der Schließstellung des Sanitärventils entsprechenden Schaltposition umschaltbar ist. Das hier beschriebene bevorzugte Ausführungsbeispiel erlaubt eine funktionssichere und stabile Betätigung des erfindungsgemäßen Sanitärventils mit vergleichsweise geringem Aufwand.

Um das Risiko unerwünschter Leckagen zu reduzieren und um die Anzahl der benötigten Ringdichtungen am erfindungsgemäßen Sanitärventil zu vermindern, ist es vorteilhaft, wenn der als Ventilsitz ausgebildete freie Hülsen-Endbereich des Ventilstutzens mit Abstand unterhalb einer zwischen dem Gehäuse-Unterteil und dem Gehäuse-Oberteil des Innengehäuse angeordneten Trennebene angeordnet ist.

Die einfache Handhabung und Bedienung des erfindungsgemäßen Sanitärventils wird noch zusätzlich begünstigt, wenn das Innengehäuse mit einem Führungsabschnitt über das Außengehäuse vorsteht, in welchem Führungsabschnitt des Innengehäuses ein mit dem Ventilstößel in Steuer- und/oder Wirkverbindung stehender Drucktaster verschieblich geführt ist. Durch Betätigen des Drucktasters lässt sich das Pilotventil im Innengehäuse betätigen, mit dem das Hauptventil ansteuerbar und wahl- oder wechselweise in seiner Schließ- oder Offenposition bewegbar ist.

Um eine auf den Führungsabschnitt einwirkende Drehbewegung in eine Relativverdrehung von Innen- und Außengehäuse umsetzen zu können, ist es vorteilhaft, wenn der Führungsabschnitt des Innengehäuses mit dessen Gehäuse-Unterteil und/oder Gehäuse-Oberteil drehfest verbunden ist und als drehbares Betätigungselement zum Relativverdrehen von Innengehäuse und Außengehäuse ausgebildet ist.

Um die zum Betätigen des erfindungsgemäßen Sanitärventils erforderliche und auf den Drucktaster ausgeübte Druckkraft möglichst gering halten zu können, ist es vorteilhaft, wenn zwischen dem Ventilauslass und dem wenigstens einen Ventileinlass der Ventilsitz angeordnet ist, der mit der Membran verschließbar ist, wobei die Membran eine Druckkammer abschließt, die aus dem wenigstens einen Ventileinlass befüllbar ist, so dass die Membran bei befüllter Druckkammer in einer Schließposition den Ventilschlitz verschließt und bei entlasteter Druckkammer in einer Offenposition den Ventilsitz freigibt.

Dabei sieht eine bevorzugte Ausführung gemäß der Erfindung vor, dass mit dem Ventilstößel eine in den wenigstens einen Ventilauslass mündende Entlastungsöffnung an der Membran verschließbar ist.

Weiterbildungen gemäß der Erfindung ergeben sich aus der nachfolgenden Figurenbeschreibung in Verbindung mit den Ansprüchen sowie der Zeichnung. Nachstehend wird die Erfindung anhand bevorzugter Ausführungsbeispiele noch näher beschrieben.

Es zeigt:
- Figur 1: ein als Schließ- und Mischventil ausgebildetes Sanitärventil in einer perspektivischen Darstellung mit Blick auf die Unter- oder Rückseite dieses Sanitärventils,
- Figur 2: das Sanitärventil aus Figur 1 in einer perspektivischen Darstellung mit Blick auf die Vorder- oder Oberseite dieses Sanitärventils,
- Figur 3: das Sanitärventil aus den Figuren 1 und 2 in einer Seitenansicht,
- Figur 4: das Sanitärventil aus den Figuren 1 bis 3 in einer Draufsicht auf die Unter- oder Rückseite dieses Sanitärventils,
- Figur 5: das Sanitärventil aus den Figuren 1 bis 4 in einer auseinandergezogenen Perspektivdarstellung einzelner seiner Bestandteile, wobei das Sanitärventil und die davon separierten Bestandteile in einer Draufsicht auf die Rück- oder Unterseite gezeigt sind,
- Figur 6: das Sanitärventil aus den Figuren 1 bis 5 in einer auseinandergezogenen Perspektivdarstellung einzelner seiner Bestandteile, wobei das Sanitärventil hier mit Blick auf die Vorder- oder Oberseite des Sanitärventils dargestellt ist,
- Figur 7: das Sanitärventil aus den Figuren 1-6 in einem Längsschnitt, wobei das Sanitärventil hier in einer Offenstellung des in das Sanitärventil integrierten Hauptventils gezeigt ist,
- Figur 8: das hier ebenfalls längsgeschnittene Sanitärventil aus den Figuren 1 bis 7 in der Schließstellung seines Hauptventils,
- Figur 9: das Sanitärventil aus den Figuren 1 bis 8 in einem isometrisch dargestellten Längsschnitt, wobei das Sanitärventil einen unteren Gehäuseboden eines Außengehäuses aufweist, an dem das topfförmige Gehäuse-Unterteil eines Innengehäuses anliegt, welches Innengehäuse im Außengehäuse verdrehbar gelagert ist,
- Figur 10: das im Innengehäuse des gemäß den Figuren 1 bis 9 ausgestalteten Sanitärventils befindliche topfförmige Gehäuse-Unterteil in einer Draufsicht mit Blick auf eine innenliegende Gehäusekammer,
- Figur 11: das Gehäuse-Unterteil aus Figur 10 in einer perspektivischen Darstellung mit Blick auf die Gehäusekammer,
- Figur 12: das Gehäuse-Unterteil aus den Figuren 10 und 11 in einer Draufsicht auf die dem Gehäuseboden zugewandte Rück- oder Unterseite des Gehäuse-Unterteils,
- Figur 13: das Gehäuse-Unterteil aus den Figuren 10 bis 12 in einer perspektivischen Darstellung mit Blick auf die Rück- oder Unterseite des Gehäuse-Unterteils,
- Figur 14: den am Außengehäuse des in den Figuren 1 bis 9 gezeigten Sanitärventils befindlichen Gehäuseboden in einer "auf den Kopf gestellten" Seitenansicht,
- Figur 15: den Gehäuseboden aus Figur 14 in einem Querschnitt durch Schnittebene XIV-XIV aus Fig. 14,
- Figur 16: den Gehäuseboden aus den Figuren 14 und 15 in einer Draufsicht auf die dem Gehäuse-Unterteil des Innengehäuses zugewandte Vorder-, Stirn- oder Flachseite des Gehäusebodens,
- Figur 17: den Gehäuseboden aus den Figuren 14 bis 16 in einer perspektivischen Darstellung mit Blick auf die dem Gehäuse-Unterteil zugewandte Vorderseite des Gehäusebodens,
- Figur 18: den Gehäuseboden aus den Figuren 14 bis 17 in einer Draufsicht auf die dem Gehäuse-Unterteil abgewandte Rückseite des Gehäusebodens,
- Figur 19: den Gehäuseboden aus den Figuren 14 bis 18 in einer perspektivischen Darstellung mit Blick auf die dem Gehäuse-Unterteil abgewandte rückseitige Stirnfläche des Gehäusebodens,
- Figur 20: das Sanitärventil aus den Figuren 1 bis 9 in einer auseinandergezogenen perspektivischen Einzelteildarstellung mit Blick auf die Vorderseite seiner einzelnen Bestandteile,
- Figur 21: das Sanitärventil aus den Figuren 1 bis 9 in einer auseinandergezogenen perspektivischen Einzelteildarstellung mit Blick auf die Rückseite seiner einzelnen Bestandteile,
- Figur 22: ein hier als Schließ- und Regelventil ausgebildetes Sanitärventil in einer perspektivischen Darstellung mit Blick auf die Rück- oder Unterseite dieses Sanitärventils,
- Figur 23: das Sanitärventil aus Figur 22 in einer perspektivischen Darstellung mit Blick auf die Vorder- oder Oberseite dieses Sanitärventils,
- Figur 24: das Sanitärventil aus Figur 22 und 23 in einer Seitenansicht,
- Figur 25: das Sanitärventil aus den Figuren 22 bis 24 in einer Draufsicht auf die Rück- oder Unterseite des Sanitärventils,
- Figur 26: das Sanitärventil aus den Figuren 22 bis 25 in einer auseinandergezogenen Perspektivdarstellung seiner einzelnen Bestandteile, wobei die einzelnen Bestandteile des Sanitärventils hier mit Blick auf die Rück- oder Unterseite dieser Bestandteile gezeigt sind,
- Figur 27: das Sanitärventil aus den Figuren 22 bis 26 in einer auseinandergezogenen Perspektivdarstellung seiner einzelnen Bestandteile, wobei diese Bestandteile hier mit Blick auf die Vorder- oder Oberseite dieser Bestandteile gezeigt sind,
- Figur 28: das Sanitärventil aus den Figuren 22 bis 27 in einem Längsschnitt, wobei das Sanitärventil hier in der Offenstellung seines Hauptventils gezeigt ist,
- Figur 29: das hier ebenfalls längsgeschnittene Sanitärventil aus den Figuren 22 bis 28, wobei dessen Hauptventil hier in seiner Schließstellung dargestellt ist,
- Figur 30: das Gehäuse-Unterteil des in den Figuren 22 bis 29 gezeigten Sanitärventils in einer Draufsicht auf die innenliegende Gehäusekammer des Gehäuse-Unterteils,
- Figur 31: das Gehäuse-Unterteil aus Figur 30 in einer perspektivischen Darstellung mit Blick auf die im Gehäuseinnern zwischen einem zentralen Ventilstutzen einerseits und dem Gehäuse-Innenumfang des Gehäuse-Unterteils andererseits angeordneten Gehäusekammer,
- Figur 32: das Gehäuse-Unterteil aus den Figuren 30 und 31 in einer Draufsicht auf die in Gebrauchsstellung dem Gehäuseboden zugewandte rück- oder unterseitige Stirnfläche des Gehäuse-Unterteils,
- Figur 33: das Gehäuse-Unterteil aus den Figuren 30 bis 32 in einer Perspektivdarstellung mit Blick auf die in Gebrauchsstellung dem Gehäuseboden zugewandte rück- oder unterseitige Gehäuse-Stirnfläche des Gehäuse-Unterteils,
- Figur 34: den Gehäuseboden des in den Figuren 22 bis 29 dargestellten Sanitärventils in einer Draufsicht auf die in Gebrauchsstellung dem Gehäuse-Unterteil zugewandte vorderseitige Stirnfläche des Gehäusebodens,
- Figur 35: den Gehäuseboden aus Figur 34 in einer Perspektivdarstellung mit Blick auf die in Gebrauchsstellung dem Gehäuse-Unterteil zugewandte Stirnfläche des Gehäusebodens,
- Figur 36: den Gehäuseboden aus den Figuren 34 und 35 in einer Draufsicht auf die rück- oder unterseitige Stirnfläche des Gehäusebodens,
- Figur 37: den Gehäuseboden aus den Figuren 34 bis 36 in einer perspektivischen Darstellung mit Blick auf die rück- oder unterseitige Stirnfläche des Gehäusebodens,
- Figur 38: das Sanitärventil aus den Figuren 22 bis 29 mit Blick auf die rück- oder unterseitige Stirnfläche des Sanitärventils, wobei der Ventileinlass hier in einer mittleren Durchflussstellung dargestellt ist,
- Figur 39: das Sanitärventil aus den Figuren 22 bis 29 und 38 in einer Drehstellung seines Außen- und seines Innengehäuses, in welcher Drehstellung der Ventileinlass des Sanitärventils eine Stellung geringeren Durchflusses einnimmt, und
- Figur 40: das Sanitärventil aus den Figuren 22 bis 29 und 38 bis 39 in einer Draufsicht auf die rück- oder unterseitige Stirnfläche des Sanitärventils, wobei sich der Ventileinlass in seiner Offenstellung befindet, in welcher Offenstellung der Ventileinlass den größtmöglichen Durchfluss erlaubt.

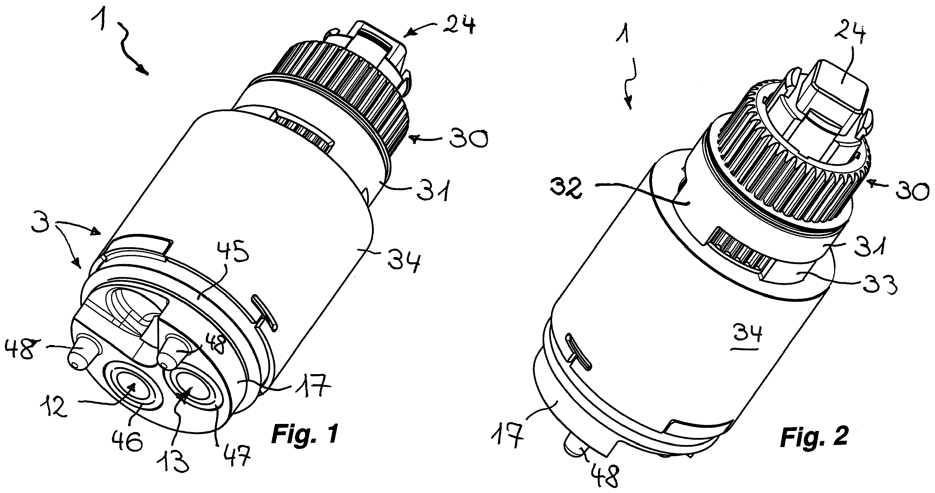

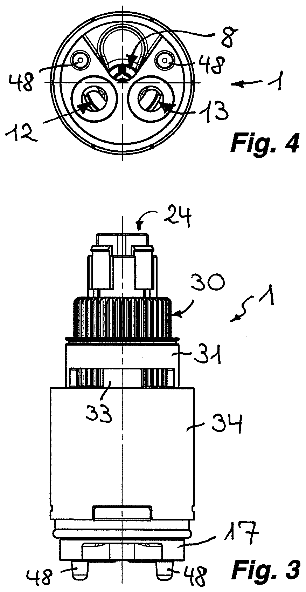

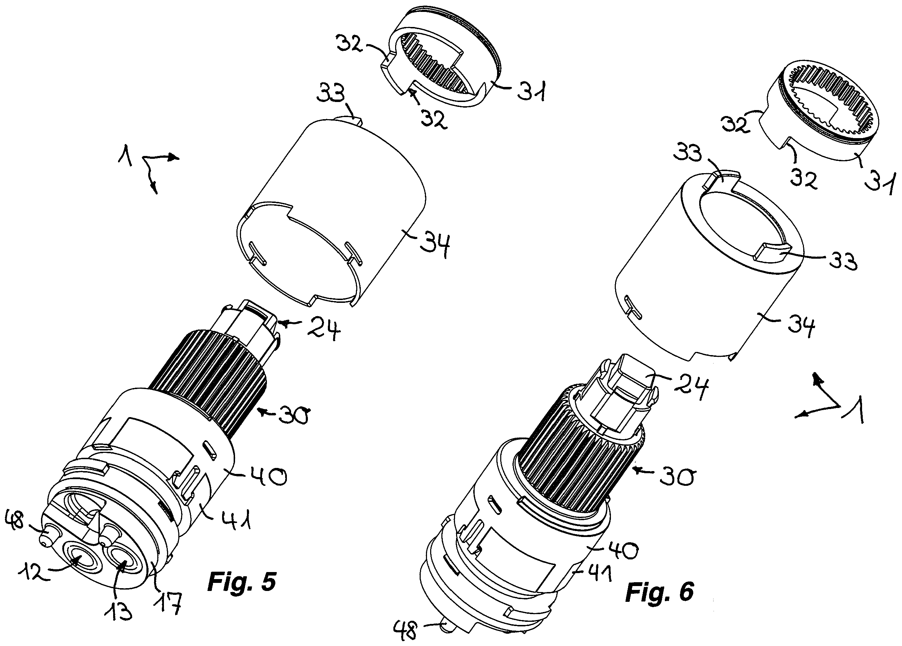

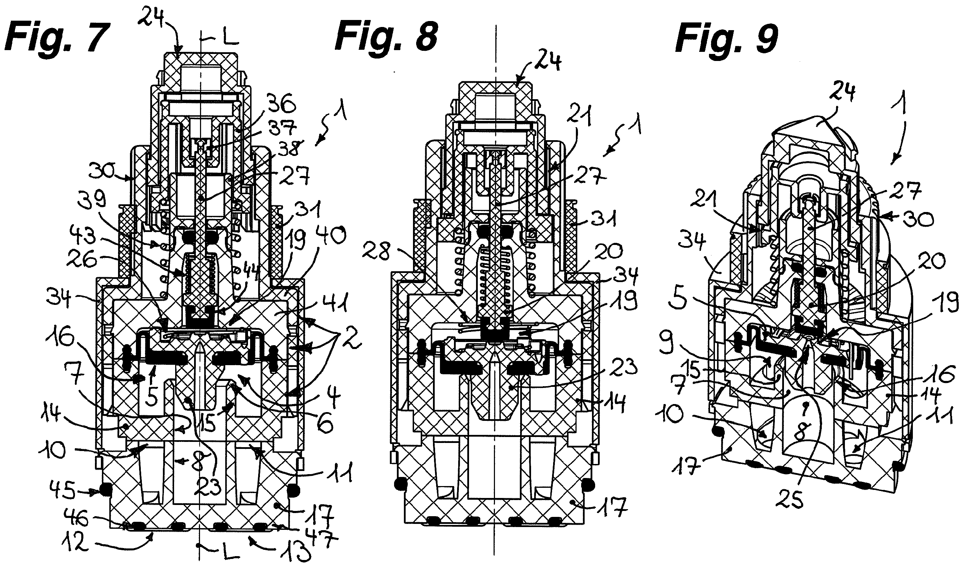

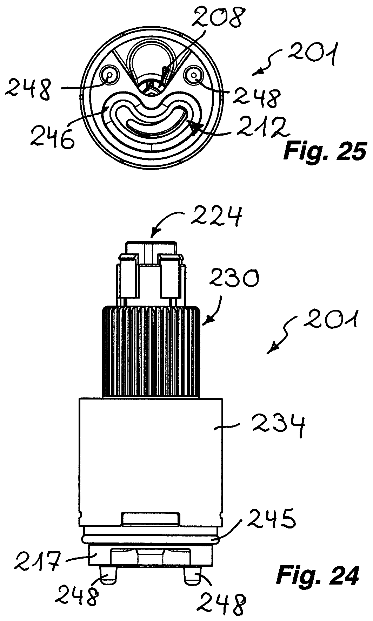

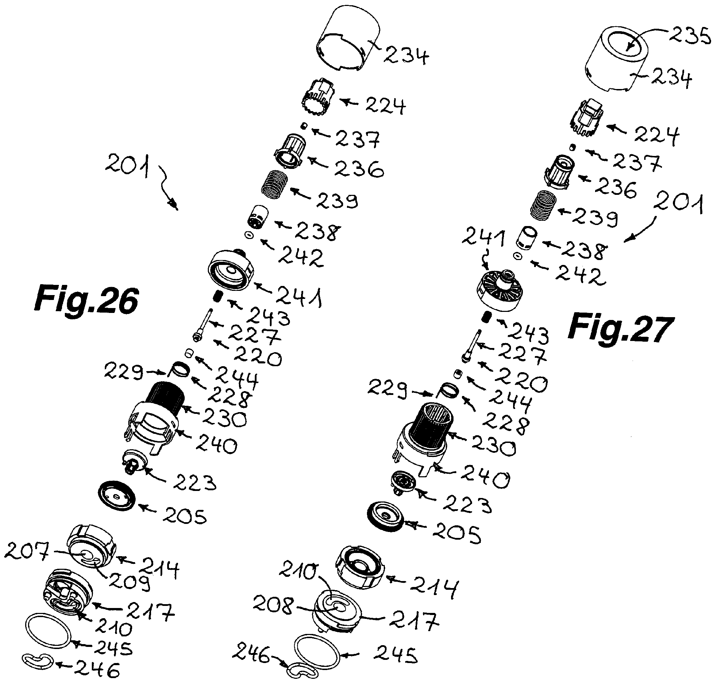

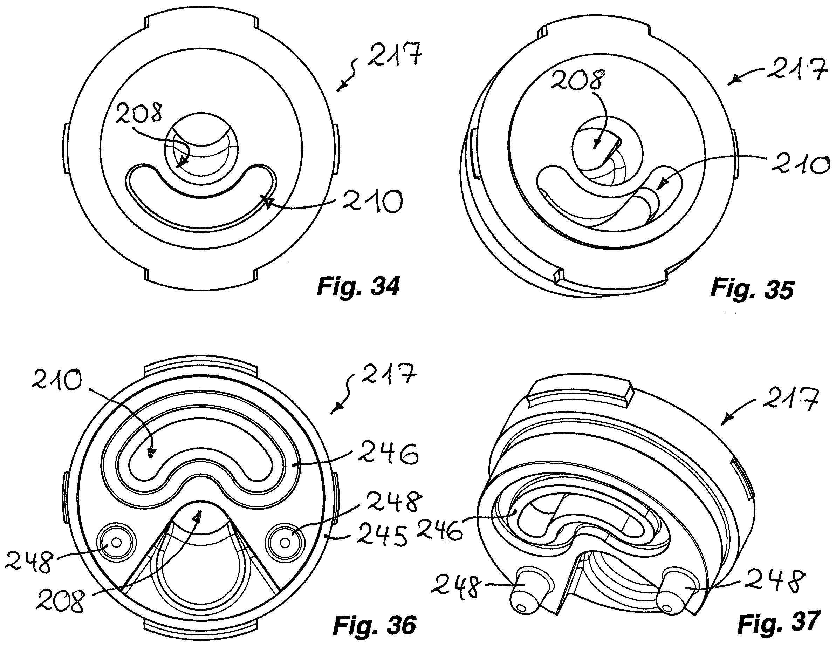

In den Figuren 1 bis 21 und 22 bis 40 ist ein Sanitärventil in zwei Ausführungen 1,201 dargestellt. Das Sanitärventil 1,201, das beispielsweise in den Armaturenkorpus einer nicht weiter dargestellten Sanitärarmatur eingebaut sein kann, weist ein Innengehäuse 2,202 auf, das in einem Außengehäuse 3,203 drehbar gelagert ist. Im Gehäuseinneren des Innengehäuses 2,202 ist ein Hauptventil 4,204 vorgesehen, das eine bewegliche Membran 5,205 aufweist, die zwischen einer in den Figuren 8 und 9 bzw. 27 gezeigten Schließstellung, in welcher Schließstellung die Membran 5,205 auf einem Ventilsitz 6,206 des Hauptventils 4,204 dicht aufliegt, und mindestens einer in den Figuren 7 und 26 gezeigten Offenstellung bewegbar ist, in welcher Offenstellung die Membran 5,205 vom Ventilsitz 6,206 beabstandet ist.

Mithilfe des Hauptventils 4,204 lässt sich der Flüssigkeitsauslauf aus dem Sanitärventil 1,201 wahlweise bzw. wechselweise öffnen oder verschließen. Das im Außengehäuse 3,203 um eine Drehachse L verdrehbar gelagerte Innengehäuse 2,202 hat eine erste Ventilöffnung 7,207, die mit einer ersten Ventilöffnung 8,208 im Außengehäuse 3,203 flüssigkeitsführend zu einem Ventilauslass des Sanitärventils 1,201 verbunden ist, wobei dieses Paar erster Ventilöffnungen 7,8; 207,208 zumindest mit ihren zueinander benachbarten Öffnungsabschnitten in der Drehachse L angeordnet ist. Das Innengehäuse 2,202 weist auch wenigstens eine zweite Ventilöffnung 9,209 auf, die gegenüber dem Ventilauslass des Sanitärventils 1,201 außenliegend angeordnet ist und mit wenigstens einer zweiten Ventilöffnung 10,11; 210 im Außengehäuse 3,203 zu wenigstens einem Ventileinlass 12,13; 212 des Sanitärventils 1,201 einander zugeordnet ist.

Um die über den wenigstens einen Ventileinlass 12,13; 212 zuströmende Flüssigkeit in ihrem durch das Sanitärventil 1,201 pro Zeiteinheit durchfließenden Volumenstrom einregeln und/oder um Flüssigkeiten mit verschiedenen Eigenschaften, z.B. Heiß- oder Kaltwasser, vermischen zu können, sind die jeweils einander zugeordneten zweiten Ventilöffnungen 9,10,11; 209,210 durch Relativverdrehen von Innengehäuse 2,202 und Außengehäuse 3,203 derart in Deckung bringbar, dass der durch Überdeckung der jeweils einander zugeordneten zweiten Ventilöffnungen 9,10,11; 209,210 freibleibende lichte

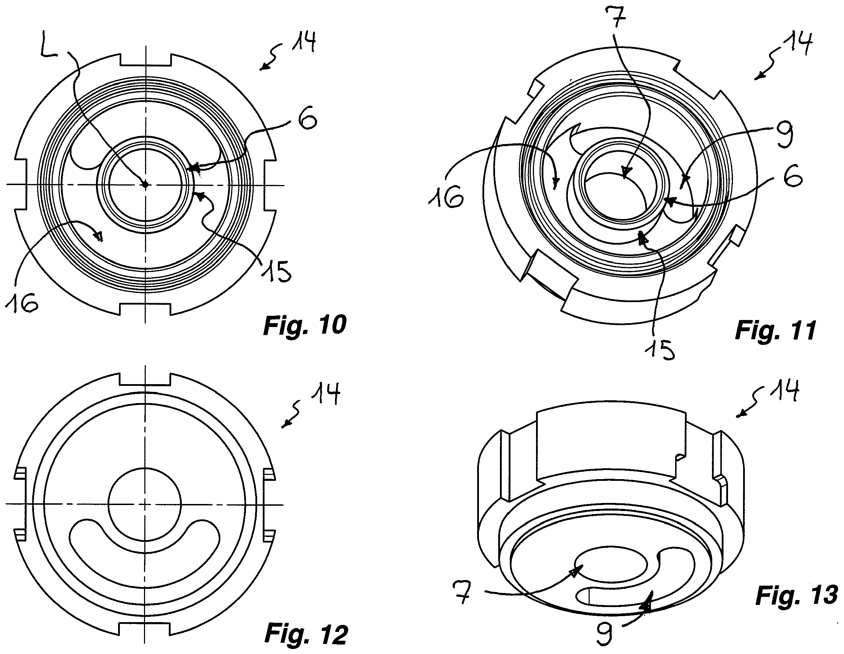

Öffnungsquerschnitt des wenigstens einen Ventileinlasses 12,13; 212 veränderbar ist. Das Innengehäuse 2,202 der Sanitärventile 1,201 weist jeweils ein in den Figuren 10 bis 13 und 30 bis 33 näher dargestelltes topfförmiges Gehäuse-Unterteil 14,214 auf, an dessen Topfboden-Innenseite ein Ventilstutzen 15,215 vorsteht, der die den Ventilauslass bildende erste Ventilöffnung 7,207 des Innengehäuses 2,202 mit dem durch den freien Hülsen-Endbereich des Ventilstutzens 15,215 gebildeten Ventilsitz 6,206 verbindet. Dabei liegt das die Ventilöffnungen 7,9; 207,209 des Innengehäuses 2,202 aufweisende Gehäuse-Unterteil 14,214 zumindest in einer gegenüber den Ventilöffnungen 7,9, 207,209 außenliegenden Ringzone des Topfbodens und/oder in einem Teilbereich des Gehäuseaußenumfangs des Gehäuse-Unterteils 14,214 flüssigkeitsdicht am Außengehäuse 3,203 an. Da im topfförmigen Gehäuse-Unterteil 14,214 des Innengehäuses 2,202 der Ventilstutzen 15,215 vorsteht und zwischen sich und dem Gehäuseinnenumfang des Gehäuse-Unterteiles 14,214 eine Flüssigkeitskammer 16,216 ausbildet, die bei den in den Figuren 1 bis 21 gezeigten Schließ- und Mischventil auch als Mischkammer dienen kann.

Mit dem in den hier gezeigten Sanitärventilen 1,201 vorgesehenen Hauptventil 4,204 lässt sich der Wasserauslauf zwischen einer Offenstellung und einer Schließstellung bewegen. Darüber hinaus lässt sich durch Relativverdrehen von Innengehäuse 2,202 und Außengehäuse 3,203 auch das aus dem Sanitärventil 1,201 ausströmende Wasservolumen einregeln oder die aus zumindest zwei Zulaufleitungen zufließenden Flüssigkeiten im Gehäuse-Unterteil 14,214 des Innengehäuses 2,202 vermischen, wobei sich die hier gezeigten Sanitärventile 1,201 auch durch eine kompakte Bauweise und eine vergleichsweise kurze Einbaulänge auszeichnen. Die Außengehäuse 3,203 der in den Figuren 1 bis 21 bzw. 22 bis 40 gezeigten Sanitärventil 1,201 weisen jeweils einen scheiben- oder plattenförmigen Gehäuseboden 17,217 auf, an dem das Gehäuse-Unterteil 14,214 des Innengehäuses 2,202 zumindest mit seiner außenliegenden Ring- und/oder Umfangszone flüssigkeitsdicht und verdrehbar anliegt. Dabei sind das Gehäuse-Unterteil 14,214 des Innengehäuses 2,202 und der Gehäuseboden 17,217 des Außengehäuses 3,203 aus Keramik hergestellt.

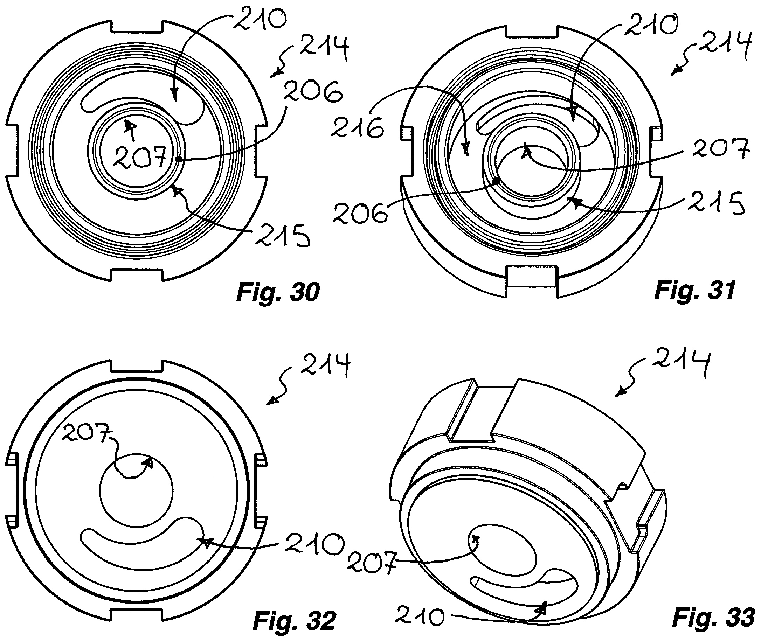

Aus einem Vergleich der Figuren 10 bis 13 bzw. 14 bis 19 einerseits sowie der Figuren 30 bis 33 und 34 bis 37 andererseits wird deutlich, dass die ersten Ventilöffnungen 7,8; 207,208 von Außengehäuse 3,203 und Innengehäuse 2,202 zumindest in ihren zueinander benachbarten Bereichen einen kreisrunden und kongruenten Öffnungsquerschnitt haben. Bei dem in den Figuren 1 bis 21 gezeigten und als Schließ- und Mischventil ausgebildeten Sanitärventil 1 ist die zweite Ventilöffnung 9 im Innengehäuse 2 zumindest zwei zweiten Ventilöffnungen 10,11 im Außengehäuse 3 derart zugeordnet, dass durch Relativverdrehen von Innengehäuse 2 und Außengehäuse 3 um die Drehachse L der lichte Öffnungsquerschnitt des zwischen der zweiten Ventilöffnung 9 im Innengehäuse 2 und zumindest einer Ventilöffnung 10 oder 11 der im Außengehäuse 3 vorgesehenen zweiten Ventilöffnungen 10;11 reduzierbar und gegenüber wenigstens einer Ventilöffnung 11 oder 10 der anderen, im Außengehäuse vorgesehenen zweiten Ventilöffnungen 11;10 vergrößerbar ist und umgekehrt. Dabei sind die im Außengehäuse 3 und insbesondere in dessen Gehäuseboden 17 vorgesehenen zweiten Ventilöffnungen 10,11 mit verschiedenen Flüssigkeitszuführungen, beispielsweise für Warm- und Kaltwasser, verbindbar.

Bei dem in den Figuren 1 bis 21 gezeigten Sanitärventil 1 bildet der zwischen dem Ventilstutzen 15 und dem Gehäuseinnenumfang des Gehäuse-Unterteils 14 vorgesehene Ringraum 16 eine Mischkammer, in der die Ventileinlässe 12,13 münden.

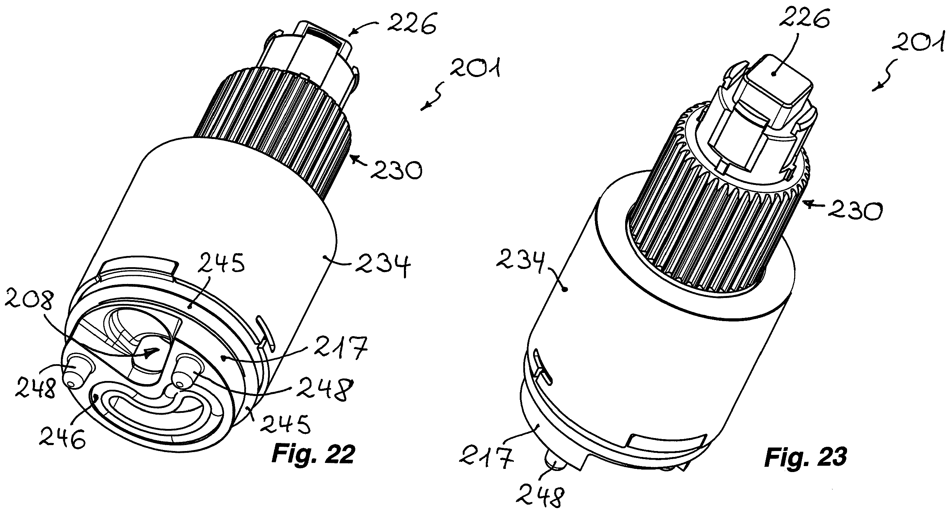

Das in den Figuren 22 bis 40 gezeigte Sanitärventil 201 ist hier als Schließ- und Regelventil ausgebildet, mit dem sich die pro Zeiteinheit durchströmende Wassermenge einregeln lässt. Das Sanitärventil 201 hat in seinem Gehäuse-Unterteil 214 dazu eine erste Ventilöffnung 207, die mit lediglich einer ersten Ventilöffnung 208 im Gehäuseboden 217 des Außengehäuses 203 derart zusammenwirkt, dass sich durch ein Relativverdrehen von Innengehäuse 202 und Außengehäuse 203 die pro Zeiteinheit durchfließende Wassermenge einregeln lässt.

Die in den Sanitärventilen 1,201 vorgesehene Misch- bzw. Regelfunktion ist von der Schließfunktion dieser Sanitärventile 1,201 getrennt. Die Sanitärventile 1,201 weisen in ihrem Innengehäuse 2,202 ein Pilotventil 19,219 auf, mit welchem das Hauptventil 4,204 zwischen der Offenstellung und der Schließstellung ansteuerbar ist. Dabei ist die Position der Membran 5,205 durch die Position eines Ventilstößels 20,220 vorgebbar, der mit einer Push-Push-Mechanik 21, 221 verbunden ist, mit welcher der Ventilstößel 20,220 zwischen einer der Offenstellung entsprechenden Schaltposition und einer der Schließstellung des Sanitärventils 1,201 entsprechenden Schaltposition umschaltbar ist. Diese Push-Push-Mechanik 21,221 kann als Dreh-/Rast- oder auch als Kugelschreibermechanik ausgebildet sein und erlaubt hier eine Verstellung des Ventilstößels 20,220 zwischen der Offenstellung und der Schließstellung des Hauptventils 4,204 jeweils durch eine einfache manuelle Druck- oder Tastbewegung. Mithilfe dieser Push-Push-Mechanik 21,221 kann der Ventilstößel 20,220 zwischen der der Offenstellung entsprechenden Schaltposition des Hauptventils 4,204 und einer der Schließstellung entsprechenden Schaltposition umgeschaltet werden.

Wie insbesondere aus den Längsschnitten gemäß den Figuren 7 bis 9 und 28 bis 29 deutlich wird, weist das Hauptventil 4,204 der Sanitärventile 1,201 die bewegliche Membran 5,205 auf, welche aus einem elastischen Material besteht und einen Ventilkörper 23,223 des Hauptventils 4,204 trägt. Die Membran 5,205 ist mit dem Pilotventil 19,219 ansteuerbar. Hierzu weist das Pilotventil 19,219 den längsverschieblichen Ventilstößel 20,220 auf, dessen Stellung entlang seines Stellwegs die jeweilige Position des Ventilkörpers 23,223 und somit der Membran 5,205 vorgibt.

An der Push-Push-Mechanik 21,221 ist außenseitig ein Drucktaster 24,224 ausgebildet, mit welchem die Push-Push-Mechanik 21,221 durch wiederholtes Drücken zwischen verschiedenen Schaltposition und insbesondere zwischen der Offenposition und Schließposition des Hauptventils 4,204 umschaltbar ist. Die Push-Push-Mechanik 21,221 steht mit dem Ventilstößel 20,220 in Wirk- oder Steuerverbindung. Die Push-Push-Mechanik 21,221 weist wenigstens zwei, der Offen- und der Schließposition entsprechende Schaltzustände auf, zwischen denen der Ventilstößel 20,220 aufgrund der Wirkverbindung umschaltbar ist.

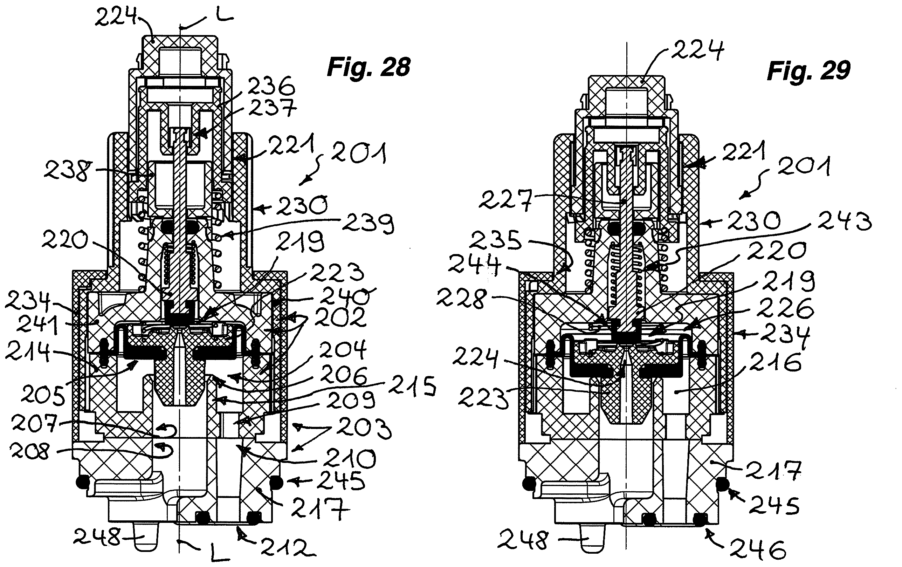

In den Figuren 8 und 9 bzw. 29 ist eine untere oder äußere Schaltposition dargestellt, in der das Hauptventil 4,204 der Sanitärventile 1,201 geschlossen ist und sich somit in seiner Schließposition befindet. In den Figuren 7 und 28 ist eine obere oder weitere äußere Schaltposition gezeigt, in welcher das Hauptventil 4,204 vollständig geöffnet ist und sich somit in seiner Offenstellung befindet. Das Pilotventil 19,219 weist eine Entlastungsöffnung 25,225 auf, die an dem Ventilkörper 23,223 und somit an der beweglichen Membran 5,205 ausgebildet ist. Wird diese Entlastungsöffnung 25,225 verschlossen, so baut sich ein Druck auf, der die Membran 5,205 mit dem Ventilkörper 23,223 in den Ventilsitz 6,206 des Hauptventils 4,204 drückt. Das Hauptventil 4,204 ist dann in seiner Schließstellung.

Wird die Entlastungsöffnung 25,225 geöffnet, so baut sich der erwähnte Druck ab, so dass sich die Membran 5,205 mit dem Ventilkörper 23,223 aus dem Ventilsitz 6,206 entfernt. Das Hauptventil 4,204 wird somit geöffnet. Dementsprechend zeigen die Figuren 7 bis 9 und 28 bis 29 unterschiedliche Stellungen des Ventilstößels 20,220, die jeweils eine Schaltposition der wenigstens zwei Schaltpositionen des Hauptventils 4,204 bilden, wie sie durch die Push-Push-Mechanik 21,221 vorgebbar sind.

Das Hauptventil 4,204 weist den Ventilsitz 6,206 auf, der mit dem Ventilkörper 23,223 und der Membran 5,205 dicht verschließbar ist. Der Ventilsitz 6,206 ist in Durchströmrichtung zwischen den Ventileinlässen 12,13 des Sanitärventils 1 bzw. dem Ventileinlass 212 des Sanitärventils 201 und dem Ventilauslass angeordnet. Das Hauptventil 4,204 dient daher zur Trennung der Ventileinlässe 12,13 bzw. des Ventileinlasses 212 sowie der Ventilauslässe der Hauptventile 4,204.

Die Membran 5,205 schließt eine Druckkammer 26,226 ab, die aus den Ventileinlässen 12,13; 212 über eine hier nicht weiter erkennbare Befüllöffnung in der Membran 5,205 befüllbar ist. Diese Befüllöffnung ist immer offen. Hierdurch wird erreicht, dass die Membran 5,205 mit dem an ihr angeordneten Ventilkörper 23,223 bei befüllter Druckkammer 26,226 in der in den Figuren 8 und 29 gezeigten Schließposition den Ventilsitz 6,206 verschließt und bei entlasteter Druckkammer 26,226 in der in Figur 7 und 9 bzw. 28 gezeigten Offenstellung den Ventilsitz 6,206 freigibt.

Wie bereits oben erwähnt, ist die Entlastungsöffnung 25,225 mit dem Ventilstößel 20,220 verschließbar und freigebbar. Da die Entlastungsöffnung 25,225 in den Ventilauslass mündet, führt ein Öffnen der Entlastungsöffnung 25,225 zu dem bereits erwähnten Druckabbau in der Druckkammer 26,226 und somit zu einem Öffnen des Hauptventils 4,204. Die Entlastungsöffnung 25,225 ist hierzu größer als die oben erwähnte Befüllöffnung dimensioniert.

Der Ventilstößel 20,220 ist über ein Steuerelement 27,227 an die Push-Push-Mechanik 21,221 angekoppelt, um die bereits beschriebenen Schaltpositionen einzunehmen. Das Steuerelement 27,227 ist von außen in die Druckkammer 26,226 dicht eingeführt. In der Wirkverbindung zwischen dem Pilotventil 19,219 und der Push-Push-Mechanik 21,221 ist außerdem eine Ausgleichsvorrichtung ausgebildet, die eine Betätigung der Push-Push-Mechanik 21,121 selbst dann erlaubt, wenn das Pilotventil 19,219 geschlossen ist und nicht weiter gegen den Ventilsitz 6,206 verfahren werden kann.

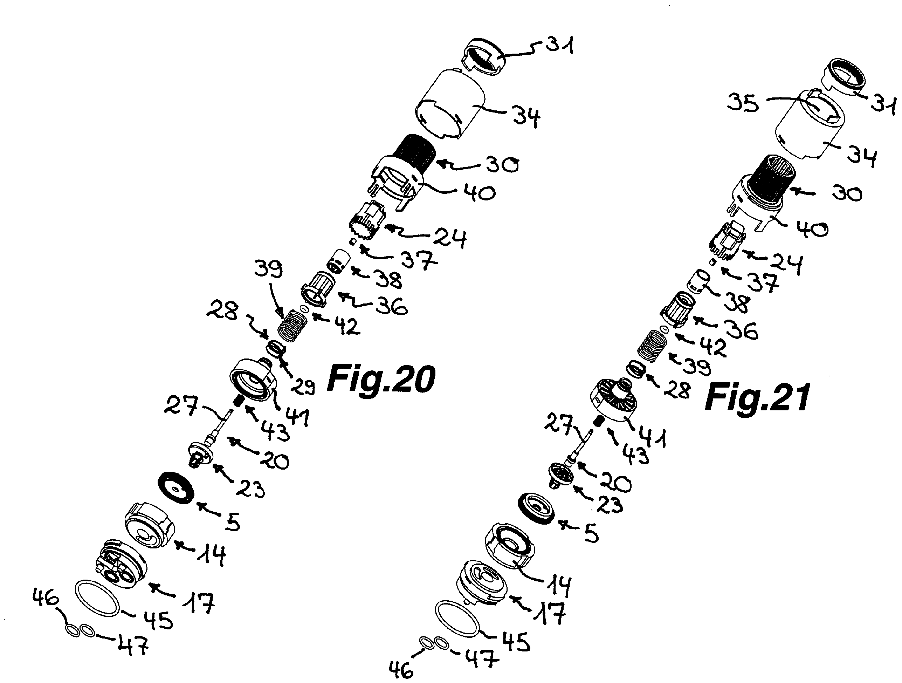

In den Einzelteildarstellungen gemäß den Figuren 20,21 und 26,27 ist erkennbar, dass das Hauptventil 4,204 auch ein Reinigungselement 28,228 aufweist, welches federnd nachgiebig ausgebildet ist und mit einem stiftförmigen freien Ende 29,229 die hier nicht weiter erkennbare Befüllöffnung in der Membran 5,205 durchsetzt und freihält. Mit seinem festen Ende ist das Reinigungselement 28,228 im Innengehäuse 2,202 fest angeordnet.

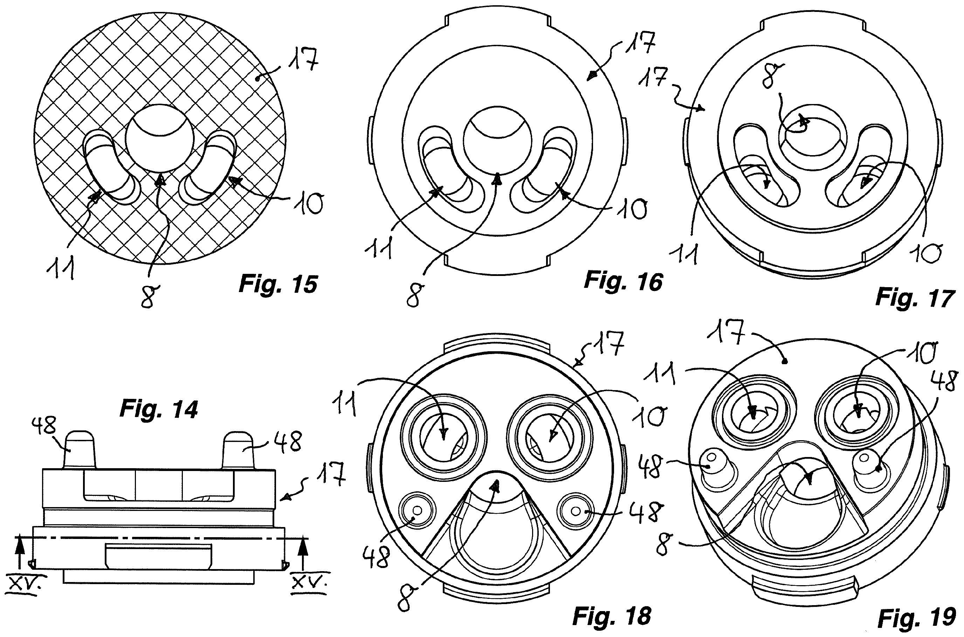

Aus den Figuren 10 bis 13 wird deutlich, dass die im Gehäuse-Unterteil des Innengehäuses 2 vorgesehene zweite Ventilöffnung als kreisbogenförmiges Langloch ausgebildet ist. Wie aus den Figuren 15 bis 19 deutlich wird, sind die der im Gehäuse-Unterteil 14 vorgesehenen zweiten Ventilöffnung 9 des Innengehäuses 2 zugeordneten zweiten Ventilöffnungen 10,11 im Außengehäuse 3 in ihrem dem Gehäuse-Unterteil 14 zugewandten Bereich ebenfalls jeweils als kreisbogenförmiges Langloch ausgebildet, wobei die Ventilöffnungen 10, 11 im Gehäuseboden 17 im Vergleich zur Ventilöffnung 9 im Gehäuse-Unterteil 14 einen kürzeren Kreisbogenabschnitt aufweisen. Durch Relativverdrehen von Innen- und Außengehäuse 2,3 kann nun der lichte Öffnungsquerschnitt des zwischen der zweiten Ventilöffnung 9 im Innengehäuse 2 und zumindest einer Ventilöffnung 10 oder 11 der im Außengehäuse 3 vorgesehenen zweiten Ventilöffnungen reduziert und gleichzeitig der lichte Öffnungsquerschnitt der zweiten Ventilöffnung 9 im Innengehäuse 2 gegenüber der anderen, im Außengehäuse 3 vorgesehenen zweiten Ventilöffnung 11 oder 10 vergrößert werden und umgekehrt.

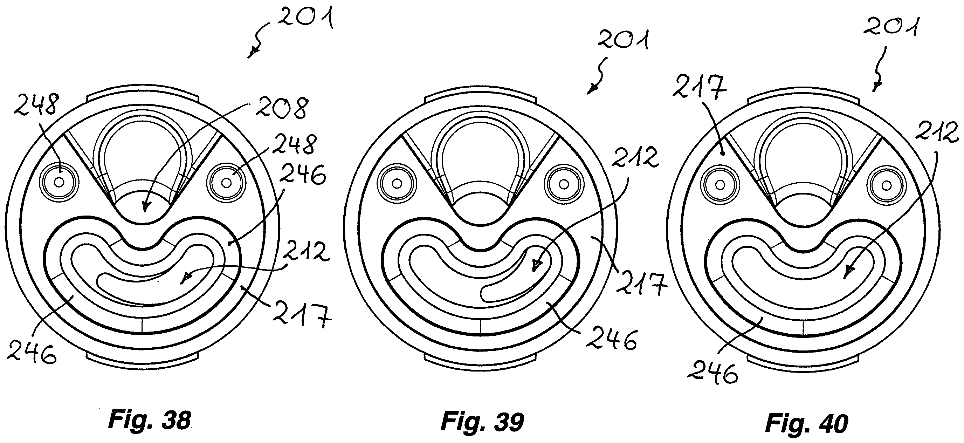

Wie aus den Figuren 38 bis 40 deutlich wird, lässt sich der lichte Öffnungsquerschnitt des Ventileinlasses beim Sanitärventil 201 entsprechend der Drehstellung des relativ zum Außengehäuse 203 verdrehbaren Innengehäuses 202 bei Bedarf derart vergrößern oder verkleinern, dass sich die Durchflussleistung durch das Sanitärventil 201 vergrößert oder verringert.

Das Innengehäuse 2,202 der Sanitärventile 1,201 steht mit einem Führungsabschnitt 30,230 über das Außengehäuse 3,203 vor. In diesem Führungsabschnitt 30,230 des Innengehäuses 2,202 ist der mit dem Ventilstößel 20,220 in Steuer -oder Wirkverbindung stehende Drucktaster 24,224 verschieblich geführt. Der Führungsabschnitt 30,230 des Innengehäuses 2,202 ist mit dessen Gehäuse-Unterteil 14,214 verbunden und hier als drehbares Betätigungselement zum Relativverdrehen von Außengehäuse 3,203 und Innengehäuse 2,202 ausgebildet. Dabei umschließt das Außengehäuse 3,203 das Innengehäuse 2,202 mit Ausnahme der Ventilein- und -auslässe sowie des Führungsabschnitts 30,230.

Bei dem in den Figuren 1 bis 21 gezeigten Sanitärventil 201 ist auf den Führungsabschnitt 30 eine Anschlagshülse 31 aufgesetzt. Diese Anschlagshülse 31 weist an ihrem Hülsen-Innenumfang eine Gegenprofilierung auf, die an einer außenumfangsseitigen Profilierung am Führungsabschnitt 30 drehfestgehalten ist. Die Anschlagshülse 31 weist zapfenförmig in Richtung zum Außengehäuse 3 vorstehende Drehanschläge 32 auf, die mit Gegenanschlägen 33 am Außengehäuse 3 zusammenwirken. Durch diese an der Anschlagshülse 31 bzw. dem Außengehäuse 3 vorgesehenen Drehanschläge 32 und Gegenanschläge 33 lässt sich die Temperatur des aus dem Sanitärventil 1 auslaufenden Mischwassers auf einen definierten Temperaturbereich festlegen.

In den perspektivischen Einzelteildarstellungen gemäß den Figuren 20 und 21 sowie 26 und 27 ist ein hülsenförmiges Gehäuseoberteil 34,234 des Außengehäuses 3,203 der Ventile 1,201 erkennbar, welches Gehäuseoberteil 34,234 eine zentrale Durchtrittsöffnungen 35,235 für den Führungsabschnitt 30,230 des Innengehäuses 2,202 aufweist. Unterhalb des Führungsabschnitts 30,230 ist der Drucktaster 24,224 erkennbar, auf den gegebenenfalls auch eine hier nicht weiter dargestellte Kappe lösbar, verrastbar oder dergleichen aufsetzbar ist. In den hülsenförmigen Drucktaster 24,224 ist eine Drehkappe 36,236 der Push-Push-Mechanik 21,221 einführbar, in welche Drehkappe 36,236 das Steuerelement 27,227 des Ventilstößels 20,220 vorsteht. Am Umfang des stabförmigen Steuerelements 27,227 ist eine Nut vorgesehen, in die ein Clip 37,237 einsetzbar ist, der den Ventilstößel 20,220 und dessen Steuerelement 27,227 unverlierbar, aber verschieblich mit der Drehkappe 36,236 verbindet. Auf die Drehkappe 36,236 sowie eine darin eingeschobene Buchse 38,238 wirkt ein als Druckfeder ausgebildetes Rückstellelement 39,239 ein. Das Gehäuseoberteil des Innengehäuses 2,202 ist hier zweiteilig ausgebildet und weist ein den Führungsabschnitt 30,230 tragendes Außenteil 40,240 auf, in das ein Innenteil 41,241 eingeschoben ist. In einer zentralen Führungsöffnung im Innenteil 41,241 ist das Steuerelement 27,227 des Ventilstößels 20,220 geführt, wobei das Steuerelement 27,227 in der Führungsöffnung durch einen Dichtring 42,242 abgedichtet ist. Im Innenteil 41,241 wird der Ventilstößel 20,220 mittels einer Schrauben-Druckfeder 43,243 in Richtung zur Membran 5,205 gepresst. Damit der Ventilstößel 20,220 die Entlastungsöffnung 25,225 in der Membran 5,205 dicht verschließen kann, weist er an seinem der Membran 5,205 zugewandten Stößelende einen Dichthut 44,244 auf. Innerhalb des Gehäuse-Unterteils 14,214 ist das als Druckfeder ausgebildete Reinigungselement 28,228 mit seinem in die nicht gezeigte Belüftungsöffnung in der Membran 5,205 vorstehenden Ende 29,229 dargestellt. Das Außenteil 40,240 des Innengehäuses 2,202 weist den Führungsabschnitt 30,230 auf, der an seinem zylindrischen Außenumfang die durch Längsrillen gebildete Profilierung aufweist, auf welchen profilierten Führungsabschnitt 30,230 bei Bedarf eine hier nicht weiter gezeigte hülsenförmige Kappe aufgesetzt ist. Innerhalb des Außenteils 3,203 ist der Ventilkörper 23,223 erkennbar, der an einer zentralen Befestigungsöffnung der Membran 5,205 mit dieser verrastet oder dergleichen verbunden ist.

Wie aus den Längsschnitten gemäß den Figuren 7 bis 9 und 28 bis 29 zu erkennen ist, ist die Membran 5,205 zwischen dem Gehäuse-Unterteil 14,214 des Innengehäuses 2,202 und dessen Innenteil 41,241 eingespannt, wobei die Membrane 5,205 diese materialverschiedenen Bestandteile 14,41;214,241 der Sanitärventile 1,201 gegeneinander abdichtet. An der Außenseite der Sanitärventile 1,201 sind Dichtringe 45,46,47;245,246 vorgesehen, die das in den Armaturenkorpus einer Sanitärarmatur eingebaute Sanitärventil im Bereich eines als Einsetzanschlag dienenden Ringabsatzes am Gehäuseaußenumfang bzw. im Bereich der Ventileinlässe 12,13;212 abdichten. Am Gehäuseboden 17;217 stehen Drehsicherungsvorsprünge 48,248 vor, die in entsprechende Löcher im Armaturenkorpus eingreifen und das Sanitärventil 1, 201 beim Drehen am Führungsabschnitt 30,230 gegen ein unbeabsichtigtes Verdrehen der Sanitärventile 1,201 selbst sichern.

### Bezugszeichenliste

- 1: Sanitärventil (gemäß den Figuren 1-21)
- 2: Innengehäuse
- 3: Außengehäuse
- 4: Hauptventil
- 5: Membran
- 6: Ventilsitz
- 7: erste Ventilöffnung im Innengehäuse 2
- 8: erste Ventilöffnung im Außengehäuse 3
- 9: zweite Ventilöffnung im Innengehäuse 2
- 10: zweite Ventilöffnung im Außengehäuse 3
- 11: zweite Ventilöffnung im Außengehäuse 3
- 12: Ventileinlass
- 13: Ventileinlass
- 14: Gehäuse-Unterteil
- 15: Ventilstutzen
- 16: Flüssigkeitskammer
- 17: Gehäuseboden
- 19: Pilotventil
- 20: Ventilstößel
- 21: Push-Push-Mechanik
- 23: Ventilkörper
- 24: Drucktaster
- 25: Entlastungsöffnung
- 26: Druckkammer
- 27: Steuerelement
- 28: Reinigungselement
- 29: freies Ende des Reinigungselements 28
- 30: Führungsabschnitt
- 31: Anschlaghülse
- 32: Drehanschläge
- 33: Gegenanschläge
- 34: Gehäuseoberteil
- 35: Zentrale Durchtrittsöffnung
- 36: Drehkappe
- 37: Clip
- 38: Buchse
- 39: Rückstellelement
- 40: Außenteil
- 41: Innenteil
- 42: Dichtring
- 43: Schrauben-Druckfeder
- 44: Dichthut
- 45: Dichtring
- 46: Dichtring
- 47: Dichtring
- 48: Drehsicherungsvorsprung
- 201: Sanitärventil (gemäß den Fig. 22 bis 40)
- 202: Innengehäuse
- 203: Außengehäuse
- 204: Hauptventil
- 205: Membran
- 206: Ventilsitz
- 207: erste Ventilöffnung im Innengehäuse 202
- 208: erste Ventilöffnung im Außengehäuse 203
- 209: zweite Ventilöffnung im Innengehäuse 202
- 210: zweite Ventilöffnung im Außengehäuse 203
- 212: Ventileinlass
- 214: Gehäuse-Unterteil
- 215: Ventilstutzen
- 216: Flüssigkeitskammer
- 217: Gehäuseboden
- 219: Pilotventil
- 220: Ventilstößel
- 221: Push-Push-Mechanik
- 223: Ventilkörper
- 224: Drucktaster
- 225: Entlastungsöffnung
- 226: Druckkammer
- 227: Steuerelement
- 228: Reinigungselement
- 229: freies Ende des Reinigungselements 228
- 230: Führungsabschnitt
- 234: Gehäuseoberteil
- 235: zentrale Durchtrittöffnung
- 236: Drehkappe
- 237: Clip
- 238: Buchse
- 239: Rückstellelement
- 240: Außenteil
- 241: Innenteil
- 242: Dichtring
- 243: Schrauben-Druckfeder
- 244: Dichthut
- 245: Dichtring
- 246: Dichtring
- 248: Drehsicherungsvorprung
- L: Drehachse

## Patentansprüche

1. Sanitärventil (1,201) mit einem Hauptventil (4,204), das eine bewegliche Membran (5, 205) aufweist, die zwischen einer Schließstellung, in welcher Schließstellung die Membran (5,205) auf einen Ventilsitz (6,206) des Hauptventils(4,204) dicht aufliegt, und zwischen mindestens einer Offenstellung bewegbar ist, in welcher Offenstellung die Membran (5,205) vom Ventilsitz (6,206) beabstandet ist, wobei das Hauptventil (4,204) im Gehäuseinneren eines Innengehäuses (2,202) vorgesehen ist, welches Innengehäuse (2,202) in einem Außengehäuse (3,203) um eine Drehachse (L) drehbar gelagert ist, wobei im Innengehäuse (2,202) eine erste Ventilöffnung (7,207) vorgesehen ist, die mit einer ersten Ventilöffnung (8,208) im Außengehäuse (3,203) flüssigkeitsführend zu einem Ventilauslass des Sanitärventils (1,201) verbunden sind, welches Paar erster Ventilöffnungen (7,8;207,208) in der Drehachse (L) angeordnet ist, wobei das Innengehäuse (2,202) wenigstens eine zweite Ventilöffnung (9,209) hat, die gegenüber dem Ventilauslass außenliegend angeordnet und mit wenigstens einer zweiten Ventilöffnung (10,11;210) im Außengehäuse (3,203) zu wenigstens einem Ventileinlass (12,13;212) des Sanitärventils (1,201) einander zugeordnet ist, wobei die jeweils einander zugeordneten zweiten Ventilöffnungen (9,10,11;209,210) durch Relativverdrehen von Innen- und Außengehäuse (2,3;202,203) derart in Deckung bringbar sind, dass der durch Überdeckung der jeweils einander zugeordneten zweiten Ventilöffnungen (9,10,11;209,210) freibleibende lichte Öffnungsquerschnitt des wenigstens einen Ventileinlasses (12,13;212) veränderbar ist, wobei das Innengehäuse (2,202) ein topfförmiges Gehäuse-Unterteil (14,214) aufweist, an dessen Topfboden-Innenseite ein Ventilstutzen (15,215) vorsteht, der die den Ventilauslass bildende erste Ventilöffnung (7,207) des Innengehäuses (2,202) mit dem durch den freien Hülsen-Endbereich des Ventilstutzens (15,215) gebildeten Ventilsitz (6,206) verbindet, **dadurch gekennzeichnet, dass** das die Ventilöffnungen (7,9;207,209) des Innengehäuses (2,202) aufweisende Gehäuse-Unterteil (14,214) zumindest in einer gegenüber den Ventilöffnungen (7,8,9,10,11; 207,208,209,210) außenliegenden Ringzone des Topfbodens mit diesem flüssigkeitsdicht am Außengehäuse (3,203) anliegt.

2. Sanitärventil nach Anspruch 1, **dadurch gekennzeichnet, dass** das Außengehäuse (3,203) einen vorzugsweise scheiben- oder plattenförmigen Gehäuseboden (17,217) hat, an dem das Gehäuse-Unterteil (14,214) des Innengehäuses (2,202) zumindest mit seiner außenliegenden Ring- und/oder Umfangszone flüssigkeitsdicht und verdrehbar anliegt.

3. Sanitärventil nach Anspruch 1 oder 2, **dadurch gekennzeichnet, dass** das Gehäuse-Unterteil (14,214) des Innengehäuses (2,202) und/oder der/ein Gehäuseboden (15,215) des Außengehäuses (3,203) aus Keramik hergestellt ist/sind.

4. Sanitärventil nach einem der Ansprüche 1 bis 3, **dadurch gekennzeichnet, dass** die ersten Ventilöffnungen (7,8;207,208) von Außengehäuse (3,203) und Innengehäuse (2,202) zumindest in ihren zueinander benachbarten Bereichen einen kreisrunden und/oder kongruenten Öffnungsquerschnitt haben.

5. Sanitärventil nach einem der Ansprüche 1 bis 4, **dadurch gekennzeichnet, dass** die mit zumindest einer zweiten Ventilöffnung (10,11;210) im Außengehäuse (3,203) flüssigkeitsführend verbundene zweite Ventilöffnung (9;209) im Innengehäuse (2,202) als sichel- oder kreisbogenförmiges Langloch ausgebildet ist.

6. Sanitärventil nach einem der Ansprüche 1 bis 5, **dadurch gekennzeichnet, dass** das Sanitärventil als Schließ- und Mischventil (1) oder als Schließ- und Regelventil (201) ausgebildet ist.

7. Sanitärventil nach einem der Ansprüche 1 bis 6, **dadurch gekennzeichnet, dass** die zweite Ventilöffnung (9) im Innengehäuse (2) zumindest zwei zweiten Ventilöffnungen (10,11) im Außengehäuse (3) derart zugeordnet ist, dass durch Relativverdrehen von Innen- und Außengehäuse (2,3) der lichte Öffnungsquerschnitt des zwischen der zweiten Ventilöffnung (9) im Innengehäuse (2) und zumindest einer Ventilöffnung (10;11) der im Außengehäuse (3) vorgesehenen zweiten Ventilöffnungen (10,11) reduzierbar und gegenüber wenigstens einer anderen Ventilöffnung (11;12) der im Außengehäuse (3) vorgesehenen zweiten Ventilöffnungen (10,11) vergrößerbar ist und umgekehrt.

8. Sanitärventil nach einem der Ansprüche 1 bis 7, **dadurch gekennzeichnet, dass** die im Außengehäuse (3) vorgesehenen zweiten Ventilöffnungen (10,11) mit verschiedenen Flüssigkeitszuführungen beispielsweise für Warm- und Kaltwasser verbindbar sind.

9. Sanitärventil nach einem der Ansprüche 1 bis 8, **dadurch gekennzeichnet, dass** der zwischen dem Ventilstutzen (15) und dem Gehäuseinnenumfang des Gehäuse-Unterteils (14) vorgesehene Ringraum eine Mischkammer bildet.

10. Sanitärventil nach einem der Ansprüche 1 bis 9, **dadurch gekennzeichnet, dass** das Gehäuse-Unterteil (14,214) mit einem Gehäuse-Oberteil des Innengehäuses (2,202) verbunden ist, dass die Membran (5,205) zwischen dem Gehäuse-Unterteil (14,214) und dem Gehäuse-Oberteil des Innengehäuses (2,202) in einer Einspannzone eingespannt ist, und dass die Membran (5,205) zwischen dem Gehäuse-Unterteil (14,214) und dem Gehäuse-Oberteil des Innengehäuses (2,202) abdichtet.

11. Sanitärventil nach einem der Ansprüche 1 bis 10, **dadurch gekennzeichnet, dass** das Gehäuse-Unterteil (14,214) und das Gehäuse-Oberteil des Innengehäuses (2,202) materialverschieden sind und/oder dass das Gehäuse-Oberteil des Innengehäuses (2,202) aus Kunststoff hergestellt ist.

12. Sanitärventil nach einem der Ansprüche 1 bis 11, **dadurch gekennzeichnet, dass** das Sanitärventil (1,201) in seinem Innengehäuse (2,202) ein Pilotventil (19,219) hat, mit welchem das Hauptventil (4,204) zwischen der Offenstellung und der Schließstellung ansteuerbar ist, und dass die Position der Membran (5,205) durch die Position eines Ventilstößels (20,220) vorgebbar ist, der mit einer Push-Push-Mechanik (21,221) verbunden ist, mit welcher der Ventilstößel (20,220) zwischen einer der Offenstellung entsprechenden Schaltposition und einer der Schließstellung des Sanitärventils (1,201) entsprechenden Schaltposition umschaltbar ist.

13. Sanitärventil nach einem der Ansprüche 1 bis 12, **dadurch gekennzeichnet, dass** der als Ventilsitz (6,206) ausgebildete freie Hülsen-Endbereich des Ventilstutzens (6,206) mit Abstand unterhalb einer zwischen dem Gehäuse-Unterteil (14,214) und dem Gehäuse-Oberteil des Innengehäuses (2,202) angeordneten Trennebene angeordnet ist.

14. Sanitärventil nach einem der Ansprüche 1 bis 13, **dadurch gekennzeichnet, dass** das Innengehäuse (2,202) mit einem Führungsabschnitt (30,230) über das Außengehäuse (3,203) vorsteht, in welchem Führungsabschnitt (30,230) des Innengehäuses (2,202) ein mit dem Ventilstößel 20,220) in Steuer- und/oder Wirkverbindung stehender Drucktaster (24,224) verschieblich geführt ist.

15. Sanitärventil nach Anspruch 14, **dadurch gekennzeichnet, dass** der Führungsabschnitt (30,230) des Innengehäuses (2,202) mit dessen Gehäuse-Unterteil (14,214) und/oder Gehäuse-Oberteil drehfest verbunden ist und als drehbares Betätigungselement zum Relativverdrehen von Innengehäuse (2,202) und Außengehäuse (3,203) ausgebildet ist.

16. Sanitärventil nach einem der Ansprüche 1 bis 15, **dadurch gekennzeichnet, dass** zwischen dem Ventilauslass und dem wenigstens einen Ventileinlass (12,13;212) der Ventilsitz (6,206) angeordnet ist, der mit der Membran (5,205) verschließbar ist, wobei die Membran (5,205) eine Druckkammer (26,226) abschließt, die aus dem wenigstens einen Ventileinlass (12,13;212) befüllbar ist, sodass die Membran bei befüllter Druckkammer (26,226) in einer Schließposition den Ventilsitz (6,206) verschließt und bei entlasteter Druckkammer (26,226) in einer Offenposition den Ventilsitz (6,206) freigibt.

17. Sanitärventil nach einem der Ansprüche 1 bis 16, **dadurch gekennzeichnet, dass** mit dem Ventilstößel (20,220) eine in dem wenigstens einen Ventilauslass mündende Entlastungsöffnung (25,225) an der Membran oder einem Ventilkörper (23,223) der Membran (5,205) verschließbar ist.

## Claims

1. Sanitary valve (1, 201) having a main valve (4, 204) which has a movable diaphragm (5, 205) which can be moved between a closed position, in which closed position the diaphragm (5, 205) rests tightly on a valve seat (6, 206) of the main valve (4, 204), and between at least one open position, in which open position the diaphragm (5, 205) is spaced apart from the valve seat (6, 206), wherein the main valve (4, 204) is provided in the housing interior of an inner housing (2, 202), which inner housing (2, 202) is rotatably mounted in an outer housing (3, 203) about an axis of rotation (L), wherein a first valve opening (7, 207) is provided in the inner housing (2, 202), which are connected to a first valve opening (8, 208) in the outer housing (3, 203) in a fluid-conducting manner to a valve outlet of the sanitary valve (1, 201), which pair of first valve openings (7, 8; 207, 208) is arranged in the axis of rotation (L), wherein the inner housing (2, 202) has at least one second valve opening (9, 209) which is arranged externally with respect to the valve outlet and is assigned with at least one second valve opening (10, 11; 210) in the outer housing (3, 203) to at least one valve inlet (12, 13; 212) of the sanitary valve (1, 201), wherein the respectively mutually assigned second valve openings (9, 10, 11; 209, 210) can be brought into alignment by relative rotation of the inner and outer housing (2, 3; 202, 203) in such a way that the clear opening cross-section of the at least one valve inlet (12, 13; 212), which is left free by overlapping the respectively mutually assigned second valve openings (9, 10, 11; 209, 210), can be varied, wherein the inner housing (2, 202) has a pot-shaped lower housing part (14, 214), on the inside of the pot base of which projects a valve connection piece (15, 215) which connects the first valve opening (7, 207), forming the valve outlet, of the inner housing (2, 202) to the valve seat (6, 206) formed by the free sleeve end region of the valve connection piece (15, 215), **characterized in that** the lower housing part (14, 214) having the valve openings (7, 9; 207, 209) of the inner housing (2, 202) rests against the outer housing (3, 203) in a liquid-tight manner at least in an annular zone of the pot base lying on the outside with respect to the valve openings (7, 8, 9, 10, 11; 207, 208, 209, 210).

2. Sanitary valve according to claim 1, **characterized in that** the outer housing (3, 203) has a preferably disk-shaped or plate-shaped housing base (17, 217), against which the lower housing part (14, 214) of the inner housing (2, 202) rests in a liquid-tight and rotatable manner at least with its outer annular and/or circumferential zone.

3. Sanitary valve according to claim 1 or 2, **characterized in that** the lower housing part (14, 214) of the inner housing (2, 202) and/or the/one housing base (15, 215) of the outer housing (3, 203) is/are made of ceramic.

4. Sanitary valve according to one of claims 1 to 3, **characterized in that** the first valve openings (7, 8; 207, 208) of outer housing (3, 203) and inner housing (2, 202) have a circular and/or congruent opening cross-section at least in their mutually adjacent regions.

5. Sanitary valve according to one of claims 1 to 4, **characterized in that** the second valve opening (9; 209) in the inner housing (2, 202), which is connected to at least one second valve opening (10, 11; 210) in the outer housing (3, 203) in a fluid-conducting manner, is designed as a crescent-shaped or circular-arc-shaped elongated hole.

6. Sanitary valve according to one of claims 1 to 5, **characterized in that** the sanitary valve is designed as a closing and mixing valve (1) or as a closing and regulating valve (201).

7. Sanitary valve according to one of claims 1 to 6, **characterized in that** the second valve opening (9) in the inner housing (2) is assigned to at least two second valve openings (10, 11) in the outer housing (3) in such a way that, by relative rotation of the inner and outer housings (2, 3), the clear opening cross-section of the valve opening between the second valve opening (9) in the inner housing (2) and at least one valve opening (10; 11) of the second valve openings (10, 11) provided in the outer housing (3) can be reduced and enlarged relative to at least one other valve opening (11; 12) of the second valve openings (10, 11) provided in the outer housing (3) and vice versa.

8. Sanitary valve according to one of claims 1 to 7, **characterized in that** the second valve openings (10, 11) provided in the outer housing (3) can be connected to different liquid supply lines, for example for hot and cold water.

9. Sanitary valve according to one of claims 1 to 8, **characterized in that** the annular space provided between the valve connection piece (15) and the inner circumference of the lower housing part (14) forms a mixing chamber.

10. Sanitary valve according to one of claims 1 to 9, **characterized in that** the lower housing part (14, 214) is connected to an upper housing part of the inner housing (2, 202), **in that** the diaphragm (5, 205) is clamped between the lower housing part (14, 214) and the upper housing part of the inner housing (2, 202) in a clamping zone, and **in that** the diaphragm (5, 205) seals between the lower housing part (14, 214) and the upper housing part of the inner housing (2, 202).

11. Sanitary valve according to one of claims 1 to 10, **characterized in that** the lower housing part (14, 214) and the upper housing part of the inner housing (2, 202) are of different materials and/or **in that** the upper housing part of the inner housing (2, 202) is made of plastic.

12. Sanitary valve according to one of claims 1 to 11, **characterized in that** the sanitary valve (1, 201) has a pilot valve (19, 219) in its inner housing (2, 202), with which the main valve (4, 204) can be actuated between the open position and the closed position, and **in that** the position of the diaphragm (5, 205) can be predetermined by the position of a valve tappet (20, 220) which is connected to a push-push mechanism (21, 221) with which the valve tappet (20, 220) can be switched between a switching position corresponding to the open position and a switching position corresponding to the closed position of the sanitary valve (1, 201).

13. Sanitary valve according to one of claims 1 to 12, **characterized in that** the free sleeve end region of the valve connection piece (6, 206), which is designed as a valve seat (6, 206), is arranged at a distance below a parting plane arranged between the lower housing part (14, 214) and the upper housing part of the inner housing (2, 202).

14. Sanitary valve according to one of claims 1 to 13, **characterized in that** the inner housing (2, 202) projects with a guide section (30, 230) beyond the outer housing (3, 203), in which guide section (30, 230) of the inner housing (2, 202) a pushbutton (24, 224), which is in control and/or active connection with the valve tappet (20, 220), is displaceably guided.

15. Sanitary valve according to claim 14, **characterized in that** the guide section (30, 230) of the inner housing (2, 202) is non-rotatably connected to its lower housing part (14, 214) and/or upper housing part and is designed as a rotatable actuating element for relative rotation of the inner housing (2, 202) and outer housing (3, 203).

16. Sanitary valve according to one of claims 1 to 15, **characterized in that** the valve seat (6, 206) is arranged between the valve outlet and the at least one valve inlet (12, 13; 212) and can be closed by the diaphragm (5, 205), wherein the diaphragm (5, 205) closes off a pressure chamber (26, 226) which can be filled from the at least one valve inlet (12, 13; 212), so that the diaphragm closes the valve seat (6, 206) in a closed position when the pressure chamber (26, 226) is filled and releases the valve seat (6, 206) in an open position when the pressure chamber (26, 226) is relieved.

17. Sanitary valve according to one of claims 1 to 16, **characterized in that** a relief opening (25, 225) on the diaphragm or a valve body (23, 223) of the diaphragm (5, 205) opening into the at least one valve outlet can be closed with the valve tappet (20, 220).

## Revendications

1. Soupape sanitaire (1, 201) avec une soupape principale (4, 204) comportant une membrane mobile (5, 205) qui peut se déplacer entre une position de fermeture dans laquelle la membrane (5, 205) repose de façon hermétique sur un siège de soupape (6, 206) de la soupape principale (4, 204) et entre au moins une position d'ouverture dans laquelle la membrane (5, 205) est éloignée du siège de soupape (6, 206), dans laquelle la soupape principale (4, 204) est prévue à l'intérieur d'un corps intérieur (2, 202), lequel corps intérieur (2, 202) est supporté dans un corps extérieur (3, 203) avec possibilité de rotation autour d'un axe de rotation (L), dans laquelle est prévue dans le corps intérieur (2, 202) une première ouverture de soupape (7, 207) qui communique avec une première ouverture de soupape (8, 208) dans le corps extérieur (3, 203) pour amener du liquide vers une sortie de soupape de la soupape sanitaire (1, 201), cette paire de premières ouvertures de soupape (7, 8 ; 207, 208) étant disposée dans l'axe de rotation (L), dans laquelle le corps intérieur (2, 202) possède au moins une deuxième ouverture de soupape (9, 209) qui est disposée sur l'extérieur par rapport à la sortie de soupape et qui est associée à au moins une deuxième ouverture de soupape (10, 11 ; 210) dans le corps extérieur (3, 203) donnant sur au moins une entrée de soupape (12, 13 ; 212) de la soupape sanitaire (1, 201), les deuxièmes ouvertures de soupape (9, 10, 11 ; 209, 210) associées respectivement l'une à l'autre pouvant être superposées par la rotation relative des corps intérieur et extérieur (2, 3 ; 202, 203) de telle manière que la section d'ouverture libre de l'au moins une entrée de soupape (12, 13 ; 212) dégagée par la superposition des deuxièmes ouvertures de soupape (9, 10, 11 ; 209, 210) associées respectivement l'une à l'autre puisse être modifiée, dans laquelle le corps intérieur (2, 202) comporte une partie inférieure de corps (14, 214) en forme de godet dans la face intérieure de fond de godet duquel dépasse un raccord de soupape (15, 215) qui relie la première ouverture de soupape (7, 207) du corps intérieur (2, 202) formant la sortie de soupape au siège de soupape (6, 206) formé par l'extrémité de douille libre du raccord de soupape (15, 215), **caractérisée en ce que** la partie inférieure de corps (14, 214) comportant les ouvertures de soupape (7, 9 ; 207, 209) du corps intérieur (2, 202) repose de façon étanche au liquide sur le corps extérieur (3, 203) au moins dans une zone annulaire du fond de godet située sur l'extérieur par rapport aux ouvertures de soupape (7, 8, 9, 10, 11 ; 207, 208, 209, 210).

2. Soupape sanitaire selon la revendication 1, **caractérisée en ce que** le corps extérieur (3, 203) possède un fond de corps (17, 217), de préférence en forme de rondelle ou de plaque, sur lequel la partie inférieure de corps (14, 214) du corps intérieur (2, 202) repose au moins par sa zone annulaire et/ou périphérique extérieure de façon étanche au liquide et avec possibilité de rotation.

3. Soupape sanitaire selon la revendication 1 ou 2, **caractérisée en ce que** la partie inférieure de corps (14, 214) du corps intérieur (2, 202) et/ou le/un fond de corps (15, 215) du corps extérieur (3, 203) sont faits de céramique.

4. Soupape sanitaire selon l'une des revendications 1 à 3, **caractérisée en ce que** les premières ouvertures de soupape (7, 8 ; 207, 208) du corps extérieur (3, 203) et du corps intérieur (2, 202) ont une section d'ouverture circulaire et/ou congruente au moins dans leurs zones voisines l'une de l'autre.

5. Soupape sanitaire selon l'une des revendications 1 à 4, **caractérisée en ce que** la deuxième ouverture de soupape (9 ; 209) dans le corps intérieur (2, 202) communiquant avec au moins une deuxième ouverture de soupape (10, 11 ; 210) dans le corps extérieur (3, 203) pour acheminer le liquide est conformée dans un trou oblong en forme de croissant ou d'arc de cercle.

6. Soupape sanitaire selon l'une des revendications 1 à 5, **caractérisée en ce qu'**elle est conformée comme une soupape de fermeture et de mélange (1) ou comme une soupape de fermeture et de régulation (201).

7. Soupape sanitaire selon l'une des revendications 1 à 6, **caractérisée en ce que** la deuxième ouverture de soupape (9) dans le corps intérieur (2) est associée à au moins deux deuxièmes ouvertures de soupape (10, 11) dans le corps extérieur (3) de telle manière que la rotation relative des corps intérieur et extérieur (2, 3) puisse réduire la section d'ouverture libre des deuxièmes ouvertures de soupape (10, 11) prévues entre la deuxième ouverture de soupape (9) dans le corps intérieur (2) et au moins une ouverture de soupape (10; 11) des deuxièmes ouvertures de soupape (10, 11) du corps extérieur (3) et l'agrandir par rapport à au moins une autre ouverture de soupape (11 ; 12) des deuxièmes ouvertures de soupape (10, 11) prévues dans le corps extérieur (3) et vice versa.

8. Soupape sanitaire selon l'une des revendications 1 à 7, **caractérisée en ce que** les deuxièmes ouvertures de soupape (10, 11) prévues dans le corps extérieur (3) peuvent être reliées à différentes arrivées de liquide, par exemple pour de l'eau froide et de l'eau chaude.

9. Soupape sanitaire selon l'une des revendications 1 à 8, **caractérisée en ce que** l'espace annulaire prévu entre le raccord de soupape (15) et la circonférence intérieure de la partie inférieure du corps (14) forme une chambre de mélange.

10. Soupape sanitaire selon l'une des revendications 1 à 9, **caractérisée en ce que** la partie inférieure de corps (14, 214) est reliée à une partie supérieure de corps du corps intérieur (2, 202), **en ce que** la membrane (5, 205) est serrée entre la partie inférieure de corps (14, 214) et la partie supérieure de corps du corps intérieur (2, 202) dans une zone de serrage et **en ce que** la membrane (5, 205) assure l'étanchéité entre la partie inférieure de corps (14, 214) et la partie supérieure de corps du corps intérieur (2, 202).

11. Soupape sanitaire selon l'une des revendications 1 à 10, **caractérisée en ce que** la partie inférieure de corps (14, 214) et la partie supérieure de corps du corps intérieur (2, 202) ont des matériaux différents et/ou **en ce que** la partie supérieure de corps du corps intérieur (2, 202) est faite de matière plastique.

12. Soupape sanitaire selon l'une des revendications 1 à 11, **caractérisée en ce que** la soupape sanitaire (1, 201) possède dans son corps intérieur (2, 202) une soupape-pilote (19, 219) avec laquelle la soupape principale (4, 204) peut être actionnée entre la position d'ouverture et la position de fermeture et **en ce que** la position de la membrane (5, 205) peut être prédéterminée par la position d'un poussoir de soupape (20, 220) qui est relié à un mécanisme *push-push* (21, 221) avec lequel le poussoir de soupape (20, 220) peut être commuté entre une position de commutation correspondant à la position d'ouverture et une position de commutation correspondant à la position de fermeture de la soupape sanitaire (1, 201).

13. Soupape sanitaire selon l'une des revendications 1 à 12, **caractérisée en ce que** la zone d'extrémité de douille libre du raccord de soupape (6, 206) conformée comme un siège de soupape (6, 206) est disposée à distance en dessous d'un plan de séparation disposé entre la partie inférieure de corps (14, 214) et la partie supérieure de corps du corps intérieur (2, 202).

14. Soupape sanitaire selon l'une des revendications 1 à 13, **caractérisée en ce que** le corps intérieur (2, 202) dépasse par une partie de guidage (30, 230) au-delà du corps extérieur (3, 203), un bouton-poussoir (24, 224) en liaison de commande et/ou d'action avec le poussoir de soupape (20, 220) étant disposé dans cette partie de guidage (30, 230) du corps intérieur (2, 202).

15. Soupape sanitaire selon la revendication 14, **caractérisée en ce que** la partie de guidage (30, 230) du corps intérieur (2, 202) est reliée avec la partie inférieure de corps (14, 214) et/ou la partie supérieure de corps de celui-ci de façon fixe en rotation et conformée comme un élément d'actionnement rotatif pour la rotation relative du corps intérieur (2, 202) et du corps extérieur (3, 203).

16. Soupape sanitaire selon l'une des revendications 1 à 15, **caractérisée en ce que** le siège de soupape (6, 206), qui peut être fermé avec la membrane (5, 205), est disposé entre la sortie de soupape et l'au moins une entrée de soupape (12, 13 ; 212), la membrane (5, 205) fermant une chambre de pression (26, 226) qui peut être remplie à partir de l'au moins une entrée de soupape (12, 13 ; 212) de sorte que, quand la chambre de pression (26, 226) est remplie, la membrane dans une position de fermeture ferme le siège de soupape (6, 206) et, quand la chambre de pression (26, 226) est dépressurisée, la membrane dans une position ouverte dégage le siège de soupape (6, 206).

17. Soupape sanitaire selon l'une des revendications 1 à 16, **caractérisée en ce qu'**une ouverture de décharge (25, 255) sur la membrane ou un corps de soupape (23, 223) de la membrane (5, 205), débouchant dans l'au moins une sortie de soupape, peut être fermée avec le poussoir de soupape (20, 220).
